(19) Europäisches Patentamt
European Patent Office
Office européen des brevets

(11) **EP 0 663 997 B1**

## (12) EUROPEAN PATENT SPECIFICATION

(45) Date of publication and mention
of the grant of the patent:
**29.05.1996 Bulletin 1996/22**

(21) Application number: **92922726.2**

(22) Date of filing: **07.10.1992**

(51) Int Cl.$^6$: **G01N 21/27**, G01D 18/00

(86) International application number:
**PCT/US92/08547**

(87) International publication number:
**WO 94/08225 (14.04.1994 Gazette 1994/09)**

(54) **SPECTROSCOPIC INSTRUMENT CALIBRATION**

KALIBRIERUNG EINES SPEKTROSKOPISCHEN INSTRUMENTS

ETALONNAGE D'INSTRUMENT SPECTROSCOPIQUE

(84) Designated Contracting States:
**AT BE DE DK ES FR GB IT NL SE**

(43) Date of publication of application:
**26.07.1995 Bulletin 1995/30**

(73) Proprietor: **ASHLAND OIL, INC.**
**Ashland, KY 41114 (US)**

(72) Inventor: **MAGGARD, Steven, M.**
**Lake Jackson, TX 77566 (US)**

(74) Representative:
**Weisert, Annekäte, Dipl.-Ing. Dr.-Ing.**
**Patentanwälte**
**Kraus Weisert & Partner**
**Thomas-Wimmer-Ring 15**
**D-80539 München (DE)**

(56) References cited:
**US-A- 4 864 842**

- **ANALYTICAL CHEMISTRY vol. 63, no. 23, 1 December 1991, pages 2750 - 2756 WANG ET AL. 'MULTIVARIATE INSTRUMENT STANDARDIZATION' cited in the application**
- **APPLIED SPECTROSCOPY vol. 46, no. 5, 1 May 1992, pages 764 - 771 WANG ET AL. 'CALIBRATION TRANSFER,ETC.'**
- **ANALYTICAL CHEMISTRY vol. 64, no. 5, 1 March 1992, pages 562 - 564 WANG ET AL. "IMPROVEMENT TO MULTIVARIATE CALIBRATION, ETC."**
- **ANALYTICAL CHEMISTRY vol. 63, no. 20, 15 October 1991, pages 2329 - 2338 ADHIHETTY ET AL. 'ACHIEVING TRANSFERABLE MULTIVARIATE CALIBRATION,ETC.'**
- **SPECTROSCOPY vol. 4, no. 4, 1 May 1989, pages 48 - 52 B.G.OSBORNE 'CALIBRATION OF INSTRUMENTS FOR NEAR INFRARED SPECTROSCOPY' cited in the application**
- **SPECTROSCOPY vol. 3, no. 11, 1 December 1988, pages 28 - 37 MARK 'A NEW APPROACH TO GENERATING TRANSFERABLE CALIBRATIONS,ETC.' cited in the application**

## Description

## BACKGROUND OF THE INVENTION

I. Field of the Invention

This invention relates to spectrophotometers capable of measuring electromagnetic radiation, such as infrared, near-infrared, ultraviolet, visible, Ramon spectra, Rayleigh scattering, and the like. More specifically, this invention relates to calibration techniques useful for predicting chemical or physical properties based on observed spectral data, preferably data obtained by means of a spectrophotometer. Still more preferably, this invention embodies near-infrared calibration equations suitable for making predictions or estimates of physical or chemical properties such as octane.

II. Prior Art Summary

In J. Sci. Food Agric., 34(1983), p. 1441-1443, B. G. Osborne directly transfers a calibration equation from one instrument to another.

"*Use of Indirect Multivariate Calibration for Quality Control of Agricultural Products by Near-Infrared Spectroscopy,*" G.Puchwein and A. Eibelhuber (Mikrochim. Acta (Wien), 1986 II, 43-51) teach a computer program for calibrating an instrument. The program picks relevant frequencies for spectral data for part of a set of samples with which to calibrate an instrument and then validates with respect to the remaining samples.

"*Near-Infrared Limitations to Silicon Photodetector Self-Calibration,*" J. M. Palmer (SPIE Vol. 499, Optical Radiation Measurements [1984], p. 7-14) teaches self-calibrating silicon photodiode detectors.

"*A Simple Internal Modulation Technique for the Spectral Calibration of Circular Variable Filter Spectrometers in the Near-Infrared,*" Chandrasekhar, Ashok, Bhatt, and Manian (Infrared Physics, Volume 24, No. 6, 1984, p. 571-572) teach the wavelength calibration of telescopes attached to near-infrared instruments for astronomical studies using the frequency dependent signal of a low-pressure mercury arc lamp.

Mark and Workman (Spectroscopy, 311), 28) developed a computer algorithm to find *isonumeric* wavelengths. Isonumeric wavelengths are calibration wavelengths which yield the same absorbance readout on a master NIR and a slave NIR. These wavelengths therefore do not change substantially from one instrument to another.

Heckman, Diffee, and Milhous (Analytica Chemica Acta, 192(1987),197) teach a computer program that transfers calibration equations by computing slope and bias corrections for each wavelength in the equation. This method of slope and bias corrections is, in fact, used in Example 3 of this application. In US 4,761,522 R. D. Rosenthaul claims a poly-tetrafluoroethylene standard for near-infrared and processes for making that standard. That standard, however, is not used in calibration transfer from one instrument to another.

*Multivariate Instrument Standardization,* by Wang et al., Anal, Chem. 1991, 63, 2750-2756, discloses four standardization methods for either correcting the primary calibration model for use on a secondary instrument, or correcting the spectra acquired on the second instrument to account for the response differences between instruments. It was discovered that the calibration model built from one batch might not be applicable to another batch. However, using mathematics of multivariate calibration, four different approaches were followed to select the best subset of calibration transfer samples available. Among the methods also discussed was methods for correcting the spectra by a process of linear transfer of one spectral response in its intensity from instrument to that of another. Not disclosed in this reference is the use of a calculated dependent variable corresponding to a physical property of interest being used as the key to establishing coefficient for constants in the second calibration equation.

B. G. Osborne, in an article entitled, *Calibration of Instrument for Near-Infrared Spectroscopy,* (48 Spectroscopy, Vol. 4 No. 4, p. 48-55). Osborne discloses in detail the steps for establishing simple correlations by multiple linear regression and also the use of derivatives of linear terms. Validation of calibration curves are discussed; specifically how particular wavelengths are chosen to establish the terms in the multiple linear regression equations, along with the statistical significance of a particular calibration sample. This method can be utilized in this invention for the purpose of defining the calibration equations of the calibrated instrument for a range of values within which useful predictions can be made, i.e., the range of interest.

Still other methods for determining calibration equations are those discussed in Analytical Chemistry Journal Vol. 60, pages 1193-1202 (1988) by David M. Haaland and Edward V. Thomas. The principles of inverse least squares, partial least squares, classical least squares, and principal component regression analysis are disclosed.

*Liquid Absorption Standards For Ultraviolet, Visible, and Near-Infrared Spectrophotometry,* R. G. Martinek, J. Amer. Med. Technol. July-August, 1978, on p. 210-216. Liquid absorbance standards are shown to have the following desirable characteristics: broad absorption peaks; wide wavelength range; high molar absorptivity; stability in solution; readily definable specifications of purity; and minimal spectral temperature coefficients. The purpose of using such standards is to permit calculation of *absolute* absorbance based upon the observed absorbance and the application of an instrument correction factor.

*The Use of Statistics In Calibrating and Validating Near Infrared On-Line Analyzers,* Bruce Thompson, ISA, 1989 Paper #88-0116, uses near-infrared for both process control and statistical process control.

*"Calibration of Instruments for Near-Infrared Spectroscopy",* B. G. Osborne (Spectroscopy, 4(4), p. 48-50) teaches the need for multiplicative scattering correction for solid samples due to particle-size differences in solids and computer transfer of complex equations. Osborne discusses procedures for developing calibration equations of particular relevance and usefulness in the present invention. The selection of appropriate wavelengths and samples are discussed and relevant articles cited further explaining the techniques employed. The transfer of calibration equations from one instrument to another are disclosed to require, in the case of most modern instruments, only a change in intercept value, and computerized procedures allow for differences between spectral data generated by different instruments. These computerized procedures are not taught in detail, but are likely to involve transforming the spectral data of one instrument to be consistent with that of another instrument. This is to be distinguished from the method involved in the present invention, which instead of transforming the spectral data, the relevant coefficients in the calibration equation for the second instrument are changed from those found in the calibration equation of the first instrument in accordance with a unique procedure discussed in this specification.

In the inventor's doctoral dissertation, *A Chemometric Analysis of a Magnetic Water Treatment Device* available from University Microfilms International, Dissertation Information Service, order number 8919928, there is a discussion of linear regression analysis (simple and multiple) for a linear regression model, and data transformations which can transform non-linear types of data into data which is appropriate for linear regression modeling. Definitions are shown which establish the degree of reliability that the value of one variable (the dependent variable) can be estimated on the basis of values for other variables (the independent variables). In general, the methods for determining regression constants (or coefficients) for the calibration equations discussed in the inventor's doctoral thesis are useful in establishing the calibration equation for the first or reference instrument in the present invention.

*A New Approach to Generating Transferable Calibrations for Quantitative Near Infrared Spectroscopy,* H. Mark and J. Workman, Spectroscopy Volume 3, No. 11, p. 28-36, shows that instrument variability makes transfer of calibrations between instruments difficult. However, by selecting the wavelengths and corresponding spectral properties for such wavelengths to meet certain criterion, many of the variations between instruments will not change significantly the calibration equation from one instrument for that calibration equation which would work satisfactorily in another instrument. Not disclosed is how to revise one calibration equation from one instrument to be suitable for use in another instrument where there is a significant change in the calibration equation suitable for the second instrument.

*Tobacco constituents to Tilting Filter Instruments,* R. A. Heckman, J. T. Diffee, L. A. Milhous, Analytica Chemica Acta, 192(1987) p. 197-203, teach transferring a near-infrared monochromatic calibration for tobacco constituents to a tilting-filter instrument in order to utilize the experimental calibration equation for a sensitive but not rugged laboratory instrument to analyze data in a rugged production oriented instrument to predict properties such as moisture, glycerin, propylene glycol, nicotine, and reducing sugar. A program called MTRAN cannot be used without difficulty unless care was exercised to insure that the tilting-filter instrument is properly configured with filters so as to accommodate the wavelengths in the primary or master calibration equation for the laboratory instrument. Consequently, before the primary calibration can be transformed, the monochromatic data files are compressed to simulate a tilting-filter instrument. The resulting data file is used to re-establish the calibration equation. With the foregoing changes, CALTRAN, a program formerly used only for calibration transfer between filter instruments, could be used to effect transfer from a near-infrared monochromatic instrument to a tilting filter instrument.

Typically, the prior art seeks to make changes in the observed spectra (or mathematical transform thereof) produced in one instrument conform to those produced by a calibrated reference instrument. Only after the spectra from an uncalibrated instrument is brought into coincidence with that spectra from a calibrated instrument did one seek to transfer a calibration equation from one instrument to another. Our experience has been that this tends to introduce errors, uncertainty, and numerous numerical difficulties which reduce the ease and precision that is made possible by the invention of this specification.

U.S. 4,963,745 to Maggard entitled *Octane Measuring Process and Device* discloses how to initially establish a calibration equation for a reference instrument. Specifically disclosed is that spectral features, such as second derivatives, of infrared spectral data at methyne band frequencies, in the range of about 1200 to 1236 nanometers (nm), were highly correlatable to octane values for gasoline-like substances. Numerous patents and articles are cited within the text of the specification, as references cited, and as other publications, all of which including those expressly cited are expressly incorporated herein by reference.

An example of a linear calibration equation is one of the form $Y_c{}^i = A^i + \Sigma_j B_j{}^i X_{jc}{}^i$ where a $Y_c{}^i$ is the predicted value of some physical or chemical property, such as octane values for a gasoline, C, of a set called sample-c. As discussed in Example 7, 226 gasoline samples were measured to determine $A^i$, and each $B_{jc}{}^i$ for j = 1 to 3, to obtain a multiple regression equation suitable for predicting pump octane values of gasoline samples, using a first instrument; instrument-i, the reference instrument. Pump octane is the average of ASTM methods D2699 and D2700, and is commonly known as (R+M)/2 octane. The inferred reproducibility of this test method is a 95% confidence limit of ±0.71 octane numbers over the octane range of 84-94 pump octane. From the second instrument, instrument-k, while in transflectance mode, gasoline absorbances at 1196, 1220, and 1236 nanometers (nm) were used to determine the values for the second derivative of an absorbance spectra, the spectral features, $X_{jc}{}^{k}$, in the linear calibration equation for inferring a pump octane. The standard error of prediction ("SEP") is the statistical parameter that equals the square root of the mean residual variance of unknown samples.

## SUMMARY OF THE INVENTION

A calibrated spectrometer can indirectly determine a physical or chemical property of a sample based upon spectral responses measured by the spectrometer with respect to the particular sample. This invention is directed to a method for calibrating or recalibrating a first spectrometer in light of a second spectrometer, or itself, respectively. The calibration employs a unique selection and manipulation of spectral data obtained from both the first and the second instrument. The recalibration of the first instrument employs a unique selection and manipulation of spectral data from the same first instrument, that is obtained both before and after the need for recalibration of the first instrument arises. Instead of modifying the respective responses of the first and second instrument, or the first instrument before and after the need for calibration of the first instrument arises, this invention modifies the calibration equation of the second, or recalibrated instrument, to yield consistent results to those obtained by the first instrument before it goes out of calibration. A calibration equation is an equation which transforms spectral data of a particular sample at a variety of wavelengths to a calculated value for a chemical or physical property. Generally, the form of such calibration equations is that of a linear combination of absorbances or mathematical transforms of absorbances measured by the first and second instrument for each sample. Surprisingly, and confirmed statistically, the accuracy of the calibrated or recalibrated instrument is maintained and in some instances improved.

Instruments available on the market today take raw spectral data and digitize or form an analog signal representative of it for use in making calculations. As an essential step in such calculations, a calibration equation in conjunction with said signal defines a dependent variable. This dependent variable is either equal to or indicative of a value for some physical or chemical property of the material from which the raw spectral data was measured. The calibration equation appropriate to a particular instrument will vary depending upon changes in the spectrometer that produces the raw spectral data. To calibrate a spectrometer, one defines an appropriate calibration equation that in conjunction with a signal representative of raw spectra measured by the spectrometer for some material will determine for the value of its dependent variable a value either equal to or indicative of some physical or chemical property of the measured material. In practice, changes in such an equation relate directly to changes in constants found in such an equation. This invention is directed in part to how to determine these constants for an uncalibrated instrument by recourse to a calibrated instrument and its calibration equation. Once these constants are determined, then a new or transferred calibration equation has been found that can be used in conjunction with a digitized signal or an analog signal representative of raw spectra measured by the previously uncalibrated instrument.

To determine a calibration equation, calibration equation-2, for a second instrument, instrument-2, by recourse to a calibrated first instrument, instrument-1, and its corresponding calibration equations, equation-1, the steps in any available order for achieving this in accordance with this invention comprise those of claims 1, 2 or 3 as appended.

## BRIEF DESCRIPTION OF THE DRAWINGS

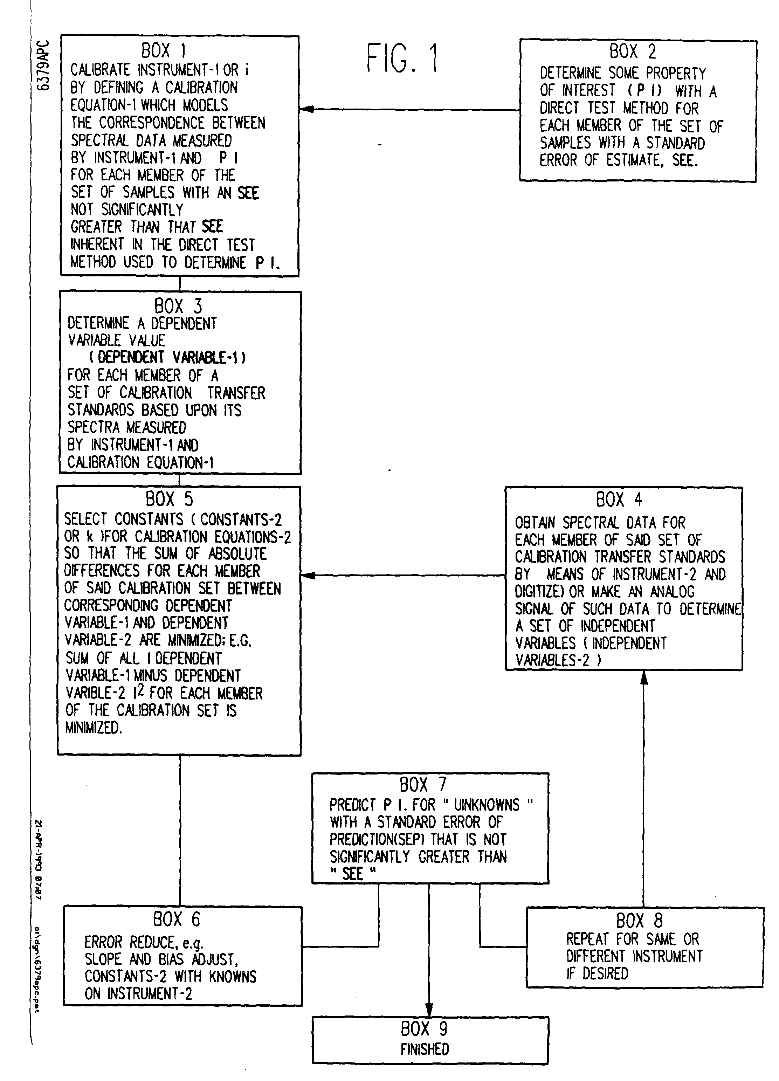

Figure 1 is a schematic overview of this invention.
Figure 2 is a flow diagram for Example 5.
Figure 3 is a flow diagram for Example 6.

## DETAILED DISCUSSION OF THE INVENTION

This invention solves the problem of how to utilize the results from calibrating one instrument for calibrating a different instrument. Alternatively, this invention can deal with recalibration of an instrument to insure consistent results after there has been some change in an instrument's spectral response, such as occur due to changes in light sources, for example due to replacing burned out bulbs, or due to new connections used to collect data from different sources, such as changes in fiber optics used to transmit light or electromagnetic radiation from one location to another, due to changes in path length, or due to changes in spectroscopic mode, such as from transmittance to transflectance.

The invention broadly deals with calibrating a new instrument by recourse to a reference instrument, but also contemplated is a method for continuously monitoring an instrument to be sure that it has not changed so much so that a new calibration equation is required to obtain reliable predictions for some physical or chemical property of a material of interest.

The invention contemplates methods for indirectly determining a variety of properties-p such as cetane, octane, aromatic-naphthene-olefin content, viscosity-index, molecular weight, and many others, by means of spectroscopic data. Spectral data broadly is intended to include, but not be limited to, all intensity versus wavelength spectra that arise when light, broadly intended to cover a wide range of frequencies such as radio frequency to ultra-violet interacts with a material. Generally, any spectral features (as defined in this specification) derivable from spectral data, which can be correlated to predict values for a chemical or physical property determined directly or indirectly, are within the intended scope of this invention.

Some benefits made available by this invention include:

1. Only a small number of samples (compared to the number used in the original calibration of the reference instrument) is required to determine the calibration equation for the uncalibrated instrument because the calibration equation of the reference instrument can be used. Example 7 shows that a small calibration sample consisting of only four members can be used.

2. The calibration set, sample-c, does not have to contain any unstable exemplars that may have been included in the original calibration set of samples and preferably, in the case of mixtures, such as gasoline or other petroleum fuels, can contain some of the pure molecules or easily prepared mixtures thereof.

The limitation on appropriate members of sample-c in determining a calibration equation appropriate to an uncalibrated instrument based upon its spectral responses depends in part upon the statistical treatment chosen for the data. For multiple linear regressions, the number of members of sample-c must be at least one more than the number of wavelengths (independent variables) used in the model, unless a slope and bias correction or other error reducing step is also used. For example, at least four samples must be used to transfer a calibration equation having three independent variables.

We have found that in addition to a slope and bias adjustment, other error reducing steps such as least squares error reduction, generalized least sum, and perhaps other techniques can further reduce any remaining error in the resulting calibration equation-2.

Preferably, for the reference set (sample-c) to be useful for transferring the statistical variance, co-variance, or function derived from variance from a calibrated instrument to an uncalibrated instrument, or to the same instrument at a later date, the sample-c should disclose spectral features which change as the instrument changes. For purposes of this invention, sample-c should be selected so its absorbance shows changes at the wavelengths of interest when changes in instrument performance occur, but should remain constant (within instrumental limits) when the instrument is operated at standard or typical conditions.

A specific application of one solution derived from this invention is the calibration of a near-infrared spectrophotometer by use of the results derived from a fully or partially calibrated reference near-infrared spectrophotometer. Throughout the specification, reference will be made to one or more spectrophotometers. The fully or partially calibrated spectrophotometer or other instrument will be referred to as the "reference instrument" or "reference spectrophotometer", has its calibration equation fully or partially defined. The instrument to be calibrated with respect to the reference will be referred to as the "uncalibrated instrument" or "uncalibrated spectrophotometer". A reference instrument may become uncalibrated or go out of calibration as a result of a variety of changes either within the instrument itself or from connections between the instrument and the source from which it derives its measurements or spectral data.

This invention enables an uncalibrated spectrophotometer to be calibrated by reference to a reference spectrophotometer by means of a far smaller calibration set of samples (the *calibration set* of samples) than was required to fully define a calibration equation for the reference spectrophotometer to begin with. The calibration set of samples is here referred to as *set of sample-c,* or simply, *sample-c.* To determine a calibration equation for calculating octane, aromatics, olefins, polyols, hydroxyl number, etc., for a near-infrared instrument, such as NIR Systems Model 6500, LT Industries Model 1200, Guided Wave Model 300 Series; Bran-Luebbe Infralyzer; or Infraprover; approximately 200 blends are used. Unfortunately, since gasolines are blends with components having different volatilities, it is very difficult, if not impossible, to store these samples to be run on an uncalibrated spectrophotometer at some later date. In other words, the samples used to calibrate the reference spectrophotometer need not be available. Not using the same materials used to calibrate the reference spectrophotometer compounds the difficulty of calibrating an uncalibrated spectrophotometer because each member of the set of sample-s of the approximately 200 had to have its octane or knock values determined in accordance with ASTM D2699 and D2700, or the like. The procedure for determining knock values are very time consuming and require multiple determinations on the same sample with different engines before reliable knock-value results are obtained.

Unknown prior to this invention was whether pure gasoline-like components, e.g. specific hydrocarbon molecules, that are readily reproducible could be selected for the set of sample-c. We have found in the case of near-infrared having wavelengths in the range 800 to 2500 nm (nanometers), that a set of sample-c comprising: benzene; methyl t-butylether; iso-octane; n-decane; 1-octene; 2,3,4-trimethylpentane; n-heptane; cyclohexane; n-hexane; or toluene;

when measured in both a reference instrument and an uncalibrated instrument to produce spectral data from each instrument can provide sufficient data or information to calibrate the uncalibrated instrument. A calibrated instrument for purposes of this specification is one that provides stable and reproducible spectral responses and has a calibration equation by which statistically significant values for physical or chemical properties of a sample can be inferred with an accuracy equal to or exceeding the accuracy of a direct test method (e.g., ASTM) for determining such chemical or physical property.

Broadly, to transfer a calibration equation for octane, any compounds that are near-infrared active, i.e. absorb near-infrared radiation, in 800 nm to 2,500 nm can be used. Examples of such compounds are: n-paraffins, iso-paraffins, aromatics (such as dichlorobenzene or benzene), alcohols (such as methanol or ethanol), olefins (such as 1-octene), halogenated alkanes (such as trichloroethane), ketones (such as methyl ethyl ketone), ethers (such as methyl-t-butyl ether), esters (such as amylacetate), and naphthenes (such as cyclohexane, and methyl cyclohexane). Throughout this specification and claims, standard error of estimate or prediction are all at a 68% confidence, limit, unless expressly stated otherwise. Each is respectively referred to also as "SEE" and "SEP".

The calibration equation for a particular instrument predicts a physical or chemical property based on spectral responses or spectral data. When measuring octane values, the particular spectral responses or mathematical transforms correspond to values of the spectral features that are selected for predicting octane values for a particular sample and are explained in detail in US 4,963,745. The equation is preferably linear, but non-linear equations may also be used.

Spectral features are functionally related to spectral data, in that each spectral feature is uniquely defined by such spectral data. An example of such functional relations are mathematical transforms such as derivatives of first, second, and higher order; fourier analysis yielding frequency components and their contributions; difference spectra; integration by segments; and the like. The only limit on choosing such functional relations or mathematic transforms is that any values derived by applying them to spectral data must be correlatable as independent variables to accurately determine the value for a dependent variable in the calibration equation which corresponds, directly or indirectly, to the value for a physical or chemical property.

In discussing the invention in detail, the following definitions will be helpful. A "function" for purposes of this application is a correspondence that associates with each set of values for a set of independent variables, a unique value for a dependent variable. In accordance with this definition, a "calibration equation" of this invention is a function that establishes a correspondence between independent variables having values determined by spectral features, and a dependent variable that corresponds to the value for a chemical or physical property. Any function that determines values for a spectral feature that are both uniquely associated with spectral data and can be used in a *calibration equation* is within the scope of the invention. Spectral data are uniquely defined by the results of measuring spectral responses of a material to electromagnetic radiation. Examples of electromagnetic radiation have been discussed in other portions of this specification. The prior art has established a variety of functions that can be used to derive values for spectral features from spectral data. So long as there exists a calibration equation which contains independent variables equal to the spectral features, defined by a function, there are no limitations as to the particular spectral features or functions for spectral data that determine such-spectral features which can be employed with the invention.

"Calibration equation" for purposes of this specification and claims means an equation that predicts directly or indirectly; e.g., is functionally related to, the amount of a chemical or physical property (the dependent variable) based on one or more spectral features (the independent variables) and perhaps some other parameters; e.g., temperature.

A near-infrared regression model for octane measurements in gasoline which contain MTBE was published in a book of proceedings by the American Chemical Society, Division of Fuel Chemistry, in Volume 35, Number 1, Pages 266-275 which was written by Steven M. Maggard and also presented by him at the 199th American Chemical Society National Meeting in Boston, Massachusetts on April 22-27, 1990. Specifically disclosed in this paper and presentation is the use of methyne t-butyl combination bands, including overtones, in models to predict octanes of MTBE-containing gasoline compositions.

"Spectral features," for purposes of this application, means absorbance, transmittance, reflectance (diffuse, specular, total, attenuated total, etc.), emission, fluorescence, phosphorescence, or transflectance, or mathematical functions thereof such as derivatives, ratios, fourier transforms, and differences for ultraviolet, visible, near-infrared, mid-infrared, far-infrared, microwave, or radio frequency electromagnetic radiation.

Throughout this text we have referred to the use of derivatives of spectral absorbance data. Here we will show an example of what we mean when we use the term derivative. The logic used to take a derivative of spectral absorbance data is based on the calculus of finite differences since the data is expressed at regularly spaced intervals and is discontinuous in between the spaced intervals.

Spectral absorbance data such as gathered by a NIRSystems OL-6500 can be used. The OL-6500 has a spectral bandpass of about 9 nm but the spectral data is digitized such that recordings are displayed at 2 nm intervals. In general two things may be varied when the derivative about a point is calculated; the first of these is termed the segment and the second of these is termed the gap. The segment determines the number of points which are used to calculate the average number to the right and left of the point for which a derivative is being taken. The gap on the other hand refers to the number of points about the midpoint (immediately adjacent to the point where the derivative is being taken) which are excluded from the calculation of the adjacent segments (although the total segment length is unaltered). If we refer to the average value of the segment (higher wavelengths) above the point at which the derivative is being taken as A and the average value of the segment below the point where the derivative is taken as B, then according to the calculus of finite differences the first derivative of the point is A minus B.

For example, when the segment is 10 in 2 nanometer increments/segments and the gap is zero, the first derivative of the spectral absorbance ($d^1A/dw$) at 1170 nm is calculated as follows:

$$d^1A/dw_{1170} = \{(A_{1172}+A_{1174}+A_{1176}+A_{1178}+A_{1180})/5\}-$$
$$\{(A_{1168}+A_{1166}+A_{1164}+A_{1162}+A_{1160})/5\}$$

If the segment is changed to six and the gap is changed to 8 the first derivative is:

$$d^1A/dw_{1170} = \{(A_{1176}+A_{1178}+A_{1180})/3\} - \{(A_{1164}+A_{1162}+A_{1160})/3\}$$

In a general way, for data occurring at two nanometer intervals the first derivative of spectral absorbance data at wavelength x is:

$$d^1A/dw_x = \Sigma_i \, (A_{(x+(gap/2)+2i)})/(segment/2)$$
$$- \Sigma_i \, (A_{(x-(gap/2)-2i)})/(segment/2)$$

where:

x = wavelength in nanometers, e.g. 1170 and
i = 1 to segment/2

In NIRSystems software package, NSAS (near infrared spectral analysis software, NIRSystems, Inc.,), for reasons which are unknown, the above equation is strictly only true for segments of 2, 6, 10, 14, 18 etc., and for gaps of 0, 4, 8, 12, 16, etc. A segment of 0 is treated as a segment of 2. Likewise a segment of 4 is treated as 6, etc. Similarly a gap of 2 is treated as a gap of 0, and a gap of 6 is treated as a gap of 4, etc.

Higher order derivatives may be simplified to expressions involving only first derivative terms and solved by the form of the previous equation. In general when the derivative being sought is of the h-th order:

$$d^hA/dw_x = d^{h-1}A/dw_{(x+\{(segment+gap)/2\}+1)}$$
$$- d^{h-1}A/dw_{(x-\{(segment+gap)/2\}-1)},$$

where the gap is equal to gap of the h-th ordered derivative and the segment used to calculate the (h-1)-th ordered derivative is the same as that being sought for the h-th ordered derivative.

For example, the 4th derivative of 1170 nm at a segment of 10 and a gap of 4 is:

$$d^4A/dw_{1170} = d^3A/dw_{1178} - d^3A/dw_{1162}$$

$$= (d^2A/dw_{1186} - d^2A/dw_{1170})-(d^2A/dw_{1170} - d^2A/dw_{1154})$$

$$= \{(d^1A/dw_{1194} - d^1A/dw_{1178})-(d^1A/dw_{1178} - d^1A/dw_{1162})\}$$

$$-\{(d^1A/dw_{1178} -d^1A/dw_{1162})-(d^1A/dw_{1162} - d^1A/dw_{1146})\}$$

$$= \{\{[((A_{1198}+A_{1200}+...+A_{1206})/5)-((A_{1190}+A_{1188}+...+A_{1182})/5)]$$

$$-[((A_{1182}+A_{1184}+...+A_{1190})/5)-((A_{1174}+A_{1172}+...+A_{1166})/5)]\}$$

$$-\{[((A_{1182}+A_{1184}+...+A_{1190})/5)-((A_{1174}+A_{1172}+...+A_{1166})/5)]$$

$$-[((A_{1166}+A_{1168}+...+A_{1174})/5)-((A_{1158}+A_{1156}+...+A_{1150})/5)]\}\}$$

$$-\{\{[((A_{1182}+A_{1184}+...+A_{1190})/5)-((A_{1174}+A_{1172}+...+A_{1166})/5)]\}$$

$$-\{[((A_{1166}+A_{1168}+...+A_{1174})/5)-((A_{1158}+A_{1156}+..+A_{1150})/5)]$$

$$-\{[((A_{1166}+A_{1168}+...+A_{1174})/5)-((A_{1158}+A_{1156}+...+A_{1150})/5)]$$

$$-[((A_{1150}+A_{1152}+...+A_{1158})/5)-((A_{1142}+A_{1140}+...+A_{1134})/5)]\}\}$$

where all of the lower ordered derivatives are also taken using a segment of 10 and a gap of 4. Note that it is necessary to correct the segment and gap to a valid value before applying one of the generalized formulas (e.g. the fourth derivative at a segment of 8 and a gap of 6 is corrected to a segment of 10 and a gap of 4 before applying the formula).

Note segments of 2 nanometers were used, but segments of smaller or larger numbers or fractions of nanometers can be used. The choice preferably depends on the degree of spectral resolution available to the spectrometer.

The Examples of differentials, finite differentials, discussed are but one of many of the types of finite differentials that may be taken. The theory behind all of the methods that are available are substantially the same; however, the specific details involved in the calculation may vary somewhat. It is also to be noted that although finite differentials may be discussed, it is possible that differentials having differences that approach zero, rather than some finite number are also possible. For example, a polynomial power series like a Taylor Series can be established based upon a series of points taken from intensity versus wavelength curves or spectral data.

This invention provides a means for determining a calibration equation for a primary instrument that takes advantage of a substantial amount of work previously expended to obtain a calibration equation for a reference spectrophotometer. The primary instrument may, in fact, be the reference spectrophotometer that has gone out of calibration for reasons that have already been discussed.

To make the discussion easier to understand, the following conventions will be followed. The independent variables appropriate to a calibration equation for a primary instrument will be identified by "-i," or "-1", e.g., independent variable-i or independent variable-1 corresponds to the one or more members of a set of independent variables that are contained within the calibration equation, calibration equation-i, or calibration equation-1, respectively, for the primary instrument, referred to throughout as instrument-i or instrument-1. In most examples, there are three wavelengths used, each wavelength is referred to as wavelength-j, from which three independent variables-i derive values functionally from spectral responses of a sample, c, taken from a set of samples referred to as sample-c. Corresponding to a particular set of independent variables-i, there is a dependent variable which will be referred to as dependent variable-i. The value of dependent variable-i will usually be equal to a predicted value of property-p of sample, c. Dependent variable-i corresponds to that dependent variable found in calibration equation-i. The constants in calibration equation-i are referred to as constants-i. There are two different types of constants-i. One corresponds to a slope constant-i, and the other to a bias constant-i. The slope constants-i are coefficients of the independent variables-i. Clearly, there is a slope constant-i for each independent variable-i which is in turn dependent upon the number of wavelengths-j that are used in the calibration equation-i. There is only one bias constant-i which is not a coefficient of any independent variable-i.

When one determines a calibration equation appropriate to instrument-k (also referred to as instrument-2) by recourse to the calibration equation for instrument-i, one essentially determines a new set of calibration equation constants that correspond to constants-k. New constants are found in at least one and preferably two steps, assuming that one already has a calibration equation-i already determined for instrument-i.

To successfully transfer or modify calibration equation-i into calibration equation-k, the SEE or SEP of values for property-p based upon spectral data of instrument-k or instrument-2 by means of calibration equation-k or calibration equation-2 should most preferably be substantially as good as that achieved by instrument-i and calibration equation-i or alternatively be substantially as good as that which would be achieved had instrument-k been calibrated the same way as instrument-i, but in most cases be at least equal or better than the SEE for the primary test method for directly measuring values for property-p used to calibrate instrument-i. The benefit made available by this invention is that the number of samples that must be run on either instrument-i or instrument-k, or both, is significantly less than that number of samples required to obtain a reliable calibration equation-i for instrument-i or to fully calibrate instrument-k in the same way as instrument-i. In other words, whatever the value, $E(k)$, in the standard error of prediction for the value for a property-p based upon instrument-k and calibration equation-k will not be substantially greater than the value for the standard error of prediction resulting from determining values for a property-p by the direct or primary test method initially used to calibrate instrument-i.

One way, but not the only way, to transfer calibration equation-i to instrument-k, is to change the constants of calibration equation-i. These changed constants become constants-k. Calibration equation-i is preferably transformed into calibration equation-k, in two steps. Step Two (below) is optional, but preferable depending upon whether the correction indicated by step two is significant. By significant, is meant the inferred variance in predicted values is not more than about 10% greater than SEE or SEP, whichever is the greater, achieved by calibration equation-k without Step Two.

Step One: Determining calibration equation-k (calibration equation-2) by means of calibration equation-i (calibration equation-1) involves the following sub-steps:

(a) Determine calibration equation-i by measuring dependent variables-i directly by a primary test method with a standard error of estimate of E, and correlating said dependent variable-i to a set of independent variables-i. The set of independent variables-i may consist of one or more members.

(b) Obtain respectively with instrument-i and instrument-k spectral data-i and spectral data-k, respectively, for each member of sample-c, which are to be used in step (c) (comprising at least one member, c); functionally determine value-k and value-i, respectively, (equal to each spectral feature-k and -i, respectively) for each member of sample-c corresponding to each independent variable-k and -i, respectively.

(c) Determine (in accordance with calibration equation-i) a value for said dependent variable-i for each member of sample-c. The value determined for dependent variable-i or a value determined by some function-f using that value determined for dependent variable-i is inserted into calibration equation-k for the value of dependent variable-k in calibration equation-k. Also insert into calibration equation-k the values for spectral features-k determined for each member of sample-c. (Recall that spectral features-k are functionally determined by spectral data-k that is determined from measurements made by instrument-k of each member of sample-c. The only unknowns in calibration equation-k will therefore correspond to the constants-k.) The values for constants-k that are to be substituted into calibration equation-k produce a resulting calibration equation-k, wherein the sum of all absolute differences between each estimated value of property-p for sample, c, corresponding to dependent variable-k for sample, c, and that estimated value of property-p for sample, c, corresponding to dependent variable-i for sample, c, is minimized so that values for property-p for sample-u that have values for property-p within the range of interest are inferred based upon the resulting calibration equation-k, with an SEP of not substantially greater than the SEE or SEP of E for determining dependent variable-u directly by some primary test method. Once one has defined the constants-k, that permits one to infer the value of dependent variables-k for members of sample-u, having values for property-p, within the range of interest, within the SEE or SEP of E of the direct or primary test method, then one has obtained a calibration equation-k in light of the former calibration equation-i. An *absolute difference* is the value for a difference between two numbers that results from first squaring and then taking the positive square root. (Recall that instrument-k, the primary instrument, may in fact be the reference instrument that has gone out of calibration, or it may in fact be a totally different instrument).

The value for dependent variable-i that is to be inserted into calibration equation-k for dependent variable-k can be functionally related to dependent variable-i by a function-f such as for example a logarithm *(log)* of any base (e.g., natural or base 10) such as $Y_c^k = n \bullet \log Y_c^i + m$ or as a linear function, $Y_c^k = n \bullet Y_c^i + m$, where n and m are constants, or a linear combination of these; or in general, any function such as a polynomial or geometric series; provided that over the range of values of interest for $Y_s^k$, the function is substantially linear.

The range of values of interest for $Y_s^k$ is that range of values for a chemical or physical property that calibration equation-k in conjunction with instrument-k have been calibrated to predict with an SEE or SEP of less than that SEE or SEP of the primary test method.

Clearly, if $Y_c^k = n \bullet Y_c^i + m$ and n=1 and m=0, then $Y_c^k = Y_c^i$. However, for any other values of n and m, the corresponding constants will be related to those otherwise determined for n=1 and m=0 as follows:

$$A^k = nA_o^{\ k} \qquad B_j^{\ k} = nB_{jo}^{\ k}$$

where

$A_o^{\ k}$ = value of constant for n=1 and m=0 and
$B_{jo}^{\ k}$ = value of constant for n=1 and m=0 at wavelength-j

In other words, whatever values for n and m that are used, the dependent variable-k will be functionally related to dependent variable-i. To determine the value for the corresponding physical or chemical property directly measured, one merely transforms inversely from $Y_c^k$ to $Y_{co}^k$ where for any m and n, except n =0, $Y_{co}^k = (Y_c^k - m)/n$;

Instrument-k and its spectral data are useable in this invention, if instrument-k could be calibrated by an identical method to that which could be used to successfully calibrate instrument-i.

Preferably, calibration equation-i and calibration equation-k are linear. In the generalized method discussed above for this invention, calibration equation-i and - k need not either be of the same form or both be linear. By the same form is meant having the same functional dependence on the same number of independent variables with corresponding constants determining a dependent variable.

Preferably, calibration equations for instrument-i and instrument-k have the following linear form:

$$Y_s^{\ i} = A^i + \Sigma_j \{B_j^{\ i} X_{js}^{\ i}\} \text{ and } Y_s^{\ k} = A^k + \Sigma_j \{B_j^{\ k} X_{js}^{\ k}\}$$

where:

$Y_s^{\ i}$ is the dependent variable-i in calibration equation-i that preferably assumes a value substantially equal to property-p of any member, s, of said sample-s and $Y_s^{\ k}$ is the dependent variable k in calibration equation-k which is functionally related to $Y_s^{\ i}$ by a function-f;

$A^k$ and $A^i$ are each intercept or bias constants-i and -k in calibration equations-i and -k, respectively;

$X_{js}^{\ i}$ and $X_{js}^{\ k}$ are each one of said at least one independent variable-i and -k in calibration equations-i and-k, respectively, having a value equal to at least one said spectral feature-i and -k, respectively of a member, s, at wavelength-j, and;

$B_j^i$ and $B_j^k$ are slope constants-i and -k, respectively, corresponding to coefficients for each said at least one independent variable-i and -k corresponding to spectral features-i and -k at wavelength-j, respectively.

There may be virtually an infinite variety of ways of substituting values for constants-k that yields a calibration equation-k with an SEP not substantially greater than the SEE or SEP necessarily present in the direct method used at some point to obtain directly or indirectly calibration equation-i. By "substantially greater" is meant 30% greater, but preferably, 20% greater, and still more preferably, 10% greater. Directly determined values of property-p must at least once be obtained by some primary or direct test method, in order to calibrate an instrument by determining its calibration equation for predicting values for a physical or chemical property, property-p, for an array of materials, based upon spectral data for such materials. However, once one has calibrated a first instrument, one can use such instrument to calibrate other instruments without necessarily remeasuring property-p by the primary test method. Instrument-i has a directly-determined calibration equation-i if some or all of the constants-i therein are determined by values directly determined by the primary test method. However, where only values used to determine constants-k arise from values predicted by a previously calibrated instrument, without values from the primary test method for property-p, then instrument-k is indirectly calibrated. In all cases, there will be at least one instrument whose calibration equation is determined primarily based upon values for its dependent variable determined by recourse to a primary test method. It is the SEE or SEP of that primary test method which is being referred to above.

However, we have found that the following criteria are particularly useful in determining constants-k assuming that calibration equations-k and -i have a linear form as defined above. One criterion requires that constants-k corresponding respectively to $B_j^k$ and $A^k$ minimize to substantially the maximum degree possible the following expression: $\Sigma_c(Y_c^k - A^k - \Sigma_j B_j^k X_{jc}^k)^2$.

Alternatively, values of $B_j^k$ and $A^k$ can be used which substantially satisfy the following two equations simultaneously: $B_j^k = B_j^i \Sigma_c X_{jc}^i X_{jc}^k / \Sigma_c (X_{jc}^k)^2$ and $A^k = \Sigma_c(Y_c^k - \Sigma_j B_j^k X_{jc}^k)/n$; where n = number of members of sample-c.

Finally, we have also found a particularly useful criteria for determining constants-k corresponding to $B_j^k$ and $A^k$ is one which involves substantially satisfying the following two equations simultaneously: $B_j^k = B_j^i \Sigma_c X_{jc}^i / \Sigma_c(X_{jc}^k)$ and $A^k = \Sigma_c(Y_c^k - \Sigma_j B_j^k X_{jc}^k) / n$; where n = number of members of sample-c.

Step Two involves a slope and bias correction. The requirements for samples appropriate to a slope and bias correction are discussed in the Examples. Essentially, a slope and bias correction arises from determining values for "m" and "b" which satisfy the following expression:

$$m = [(\Sigma_c Y_c^a \ \Sigma Y_c^k)/n - \Sigma_c(Y_c^a \ Y_c^k)]/[\{\Sigma_c Y_c^k \ \Sigma_c Y_c^k\}/n - \Sigma_c Y_c^k Y_c^k]$$

$$b = \{\Sigma_c Y_c^a - m\Sigma_c Y_c^k\}/n$$

where:

$Y_c^a$ is a directly or indirectly determined value for property-p of a particular member, c, of sample-p that is determined with an inferred standard error of estimate no greater than E of the primary test method; and wherein said value for property-p is within the range of interest;

n is the number of members of sample-p; and

v is the standard error of estimate from using calibration equation-k values to determine dependent variable-k, for sample member, c, wherein v is not significantly greater than E.

Substitute said values for m and b into the following expression and an improved calibration equation results for the dependent variable-k for instrument-k, which is as follows:

$$\hat{Y}_c^k = [mA^k + b] + \Sigma_j[mB_j^k X_{jc}^k].$$

Step Two may in some instances be omitted because the correction suggested or required by applying a slope and bias correction does not result in a significant change in constants-k for calibration equation-k. But it is preferable to carry out the steps involved in a slope and bias correction to determine whether a significant correction is involved or not. We have found in most instances, a slope and bias correction is required.

What is surprising about Step Two, the slope and bias correction, is that even a significant variation in values of constants-k required by or due to the correction does not mean that an error has occurred in carrying out Step One. We have discovered that the error, if any, in Step One is substantially corrected by a slope and bias correction and vice versa. (See Example 1). Further, we have found that the number of samples required to carry out a slope and bias correction, even when added to those required to carry out Step One, are together far fewer in number than was required to determine calibration equation-i for instrument-i. This is totally unexpected and could not have been anticipated. In fact, when a significant correction in constants is indicated by a slope correction, the art (see manual for Near Infrared Spectral Analysis Software published by NIR Systems, Inc. Silver Spring, Maryland, 1989) teaches that one should recalibrate instrument-k by the same method used to initially calibrate instrument-i.

Closer examination of what is happening to the constants-k in calibration equation-k as one applies Steps One and Two is interesting. In Step One, each constant varies substantially independently in order to satisfy the set of numerical criteria discussed above. In Step Two, slope constants all vary together by an amount determined by "m". Intercept constant-k is impacted in two ways, both by "m" and an incremental amount "b". When applied together, a calibration equation-k for instrument-k preferably provides an SEP for dependent variable-k that is almost as good as, and often much better than that achieved by calibration equation-i using data measured by instrument-i or at least an SEP that is equal to or better than E, the value of SEP for the direct test method for determining values used to calibrate instrument-i. This result shown in the examples, is totally unexpected, surprising and valuable.

Also contemplated by this invention is the indirect method for determining a property-p for a sample-u using spectral data-k measured by an instrument-k, capable of determining such spectral data-k for sample-u. Though the art teaches many ways for identifying a calibration equation for an instrument, the art has not provided up till now an easy method for transforming a calibration equation-i appropriate for instrument-i to a calibration equation-k appropriate for instrument-k.

A unique form for calibration equation-k or -i involves the use of adjacent order differentials as spectral features. For example, the calibration equation for instrument-k and instrument-i each have the form:

$$Y_c^{\,k} = A^k + \Sigma_j B_j^{\,k} X_{jc}^{\,k} + \Sigma_{jc} C_j^{\,k} X_{jc}^{\,lk}$$

$$Y_c^{\,i} = A^i + \Sigma_j B_j^{\,i} X_{jc}^{\,i} + \Sigma_c C_j^{\,i} X_{jc}^{\,li}$$

Here $Y_c^{\,i}$, and $Y_c^{\,k}$ are calculated or predicted values for dependent variables based upon the calibration equations for instruments-i and -k, respectively, both for each member, c, from sample-c.

$X_{jc}^{\,i}$, and $X_{jc}^{\,k}$ are second derivatives of observed absorbances for instruments i and k, respectively, both for each member, c, from sample-c at wavelength-j.

$X_{jc}^{\,li}$, and $X_{jc}^{\,lk}$ are the third derivative for observed absorbances for instruments-i and -k, respectively, both for sample-c at wavelength-j.

We have discovered that with calibration equations in the form of adjacent orders of derivatives of spectral data, that surprisingly a slope and bias correction brings about a variation in calibration equation constants-k that results in inferred values for property-p of a sample, c, based upon spectral data measured for sample-c by instrument-k that is in excellent agreement with the results found from instrument-i and calibration equation-i.

## EXAMPLE 1

A calibration equation for an uncalibrated instrument is obtained based upon the calibration equation established for a reference instrument. Solutions for the following equations determine: $B_j^{\,k}$·s and $A^k$ in the linear calibration equation for instrument-k, the uncalibrated instrument, having the form: $Y_c^{\,k} = A^k + \Sigma_j B_j^{\,k} X_{jc}^{\,k}$; which relies on calibration equation: $Y_c^{\,i} = A^i + \Sigma_j B_j^{\,i} X_{jc}^{\,i}$; for a calibrated or reference instrument, instrument-i.

Three different mathematical criterions are used independently. Since only three wavelengths are used, J = 1 to 3; and since 25 = total number of members in sample-c, c = 1 to 25. Independent variables, $X_{jc}^{\,k}$, (where "k" identifies instrument-k) have values for spectral features derived from the spectral response of instrument-k at wavelength-j. Each wavelength-j is within the wavelength range of from 800 to 2500 nm. Here the spectral features are the second derivative of the absorbance determined at three wavelengths-J: 1196, 1220, and 1286 nm.

Mathematical Criterion I

$$\Sigma_c (Y_c^{\,i} - A^k - \Sigma_j B_j^{\,k} X_{jc}^{\,k}) = 0; \qquad \text{Assume } Y_c^{\,i} = Y_c^{\,k}$$

$$\Sigma_c Y_c^{\,i} X_{1c}^{\,k} - A^k \Sigma_c X_{1c}^{\,k} - B_1^{\,k} \bullet \Sigma_c X_{1c}^{\,k} - X_{1c}^{\,k} B_2^{\,k} \bullet \Sigma_c X_{2c}^{\,k} X_{1c}^{\,k} - B_3^{\,k} \bullet \Sigma_c X_{3c}^{\,k} X_{1c}^{\,k} = 0;$$

$$\Sigma_c Y_c^{\,i} X_{2c}^{\,k} - A^k \Sigma_c X_{2c}^{\,k} - B_1^{\,k} \bullet \Sigma_c X_{1c}^{\,k} X_{2c}^{\,k} - B_2^{\,k} \bullet \Sigma_c X_{2c}^{\,k} X_{2c}^{\,k} - B_3^{\,k} \bullet \Sigma_c X_{3c}^{\,k} X_{2c}^{\,k} = 0; \text{ and}$$

$$\Sigma_c Y_c^{\,i} X_{3c}^{\,k} - A^k \Sigma_c X_{3c}^{\,k} - B_1^{\,k} \bullet \Sigma_c X_{1c}^{\,k} X_{3c}^{\,k} - B_2^{\,k} \bullet \Sigma_c X_{2c}^{\,k} X_{3c}^{\,k} - B_3^{\,k} \bullet \Sigma_c X_{3c}^{\,k} X_{3c}^{\,k} = 0$$

Instrument-i is calibrated using multiple linear regression at the second derivative of absorbance at 1196, 1220, and 1236 nm modeling the dependent variable (R+M)/2 octane using 72 gasoline samples encompassing the octane range of 86-93 in an approximate box car distribution. Instrument-i is a NIR Systems 6500 operating in transflectance mode using fiber optics at a path length of 18mm.

From the regression equation for instrument-i, one obtains values of 25 calibration transfer standards and subsequently assigns these as values of the dependent variable (R+M)/2 octane for the 25 calibration transfer standards.

The standards are the same ones seen in Example 2.

The 25 calibration transfer standards and 10 samples of known octane are run on instrument-k. The results are summarized in Table 1.

Alternatively, we have also determined that it is possible to indirectly derive calibration equation-k from the calibration transferred equation-k, where a least squared error reducing step was used in place of the slope and bias adjustment. When the errors were modeled as the dependent variable-k using the spectral data-k, again as the independent variable, it was possible to sum the resulting constants with the constants from the calibration transferred equation-k and to indirectly derive the least squared solution (mathematical criterion 1).

Mathematical Criterion II

$$B_r^k = [B_r^i \Sigma_c X_{rc}^i X_{rc}^k]/[\Sigma_c (X_{rc}^k)^2]$$

$$A^k = \Sigma_c(Y_c^k - \Sigma_r B_r^k X_{rc}^k)/n \qquad \text{Assume } Y_c^i = Y_c^k$$

NOTE: c = 1-25; since only three wavelengths 1196, 1220, and 1236 are used; and n = 25; since number of members in sample-c is 25.

Instrument-i is calibrated using multiple linear regression at the second derivative of absorbance at 1196, 1220, and 1236 nm modeling the dependent variable (R+M)/2 octane using 72 gasoline samples encompassing the octane range of 86-93 in an approximate box car distribution. Instrument-i is a NIR Systems 6500 operating in transflectance mode using fiber optics at a path length of 18mm.

From the regression equation for instrument-i, one obtains values of 25 calibration transfer standards and subsequently assigns these as values of the dependent variable (R + M)/2 octane for the 25 calibration transfer standards. The standards are the same ones seen in Example 2.

The 25 calibration transfer standards are run on instrument-k. Regression constants are calculated as follows:

$$B_1^k = B_{1220}^k = [B_{1220}^i \Sigma_c X_{1220,c}^i X_{1220,c}^k]/\Sigma_c (X_{1220,c}^k)^2$$

$$A^k = \Sigma_c [Y_c^i - (B_{1220}^k X_{1220,c}^k) - (B_{1196}^k X_{1196,c}^k) - B_{1236}^k X_{1236,c}^k)]/25$$

The above constants in the calibration equation predict the value of 10 samples of known octane. There is a severe bias of 5.314 (R+M)/2 octane numbers. A computer program establishes that a slope correction of 0.56741 is needed and an intercept correction of 35.646. These adjustments yield the final slope and bias adjusted calibration equation for instrument-k and show a standard error of estimate of 0.184 and bias of 0.0265 (R+M)/2 octane numbers on the remaining 62 samples.

Mathematical Criterion III

$$B_r^k = B_r^i \Sigma_c X_{jc}^i/\Sigma_c X_{jc}^k$$

$$A^k = \Sigma_c(Y_c^k - \Sigma_r B_r^k X_{rc}^k)/n \qquad \text{Assume } Y_c^i = Y_c^k$$

NOTE: r = 1-3; since only three wavelengths are used. n = 25; since number of members in sample-c is 25. Just as with Criterion II, the above Criterion III are used. The results of all methods are given in Table 1.

To demonstrate the relative accuracy to be expected from an octane calibration equation transferred from one instrument, instrument-i to another, instrument-k, the following is done.

Both instrument-i and instrument-k are each independently calibrated using the same 72 samples. The calibration establishes a linear calibration equation that can be used to predict octanes. A standard error of prediction for each of these equations is established for ten knowns.

The transfer calibration equations for instrument-k is derived from calibration equation-i and one of the following criterion: I, II, or III.

Each transferred equation is slope and bias corrected with ten samples yielding a slope and bias corrected calibration equation.

The results from the above steps are shown in Table 1. What is particularly significant is that the SEP dramatically changes as a result of the slope and bias correction. However, the final SEP, after performing a slope and bias correction, in the case of Criterion I, yields an SEP identical to that of the original calibration equation-i.

A good estimate of the best SEP one might expect in this instance would be an SEP of 0.146 which is the SEP for instrument-k when fully calibrated using the 72 samples.

TABLE 1

| | Transfer Calibration Equation-k Using 25 Standards of Table 1 | | | Original Calibration Equation-i (72 Samples) | Independent Calibration of Instrument-k (72 Samples) |
|---|---|---|---|---|---|
| **Calibration Transfer Without Slope & Bias Correction** | | | | | |
| | Criterion I | Criterion II | Criterion III | | |
| $A^k$ | 74.501 | 76.041 | 75.560 | 76.263 | 70.918 |
| $B_1{}^k$ (1220nm) | 134.620 | 206.02 | 211.90 | 124.60 | 131.21 |
| $B_2{}^k$ (1196nm) | 21.139 | 26.939 | 26.940 | 24.407 | 13.48 |
| $B_3{}^k$ (1236nm) | 69.345 | 70.681 | 70.689 | 65.546 | 65.251 |
| SEP | 0.366 | 5.383 | 5.523 | 0.156 | 0.146 |
| Bias | -0.288 | 5.195 | 5.314 | 0 | 0 |

| | Predicted Results of 62 Unknowns Using Transfer Calibration Equation-k | | | Independent Calibration of Instrument-k (72 Samples) |
|---|---|---|---|---|
| **Calibration Transfer With Slope & Bias Correction Using 10 Samples** | | | | |
| | Criterion I | Criterion II | Criterion III | |
| $A^k$ | 76.013 | 78.792 | 78.753 | 70.918 |
| $B_1{}^k$ (1220nm) | 123.20 | 116.90 | 116.86 | 131.21 |
| $B_2{}^k$ (1196nm) | 19.345 | 15.285 | 14.857 | 13.48 |
| $B_3{}^k$ (1236nm) | 63.460 | 40.105 | 38.985 | 65.251 |
| SEP | 0.156 | 0.184 | 0.188 | 0.146 |
| Slope Adjustment (m) | 0.91514 | .56741 | 0.55150 | 1 |
| Bias Adjustment (b) | 7.8341 | 35.646 | 37.082 | 0 |
| Bias | 0.0191 | 0.0265 | 0.0373 | 0 |

## EXAMPLE 2

In this example, Mathematical Criterion I of Example 1 (multiple linear regression) is used and the form of the calibration equation is linear, but spectral features equal to second and third adjacent derivatives of spectral data corresponding to each selected frequency are used for the independent variables.

$$Y_c{}^k = A^k + \Sigma_j B_j{}^k X_{jc}{}^k + \Sigma_{jc} C_j{}^k X_{jc}{}^{lk}$$

$$Y_c{}^i = A^i + \Sigma_j B_j{}^i X_{jc}{}^i + \Sigma_c C_j{}^i X_{jc}{}^{li}$$

Here $Y_c{}^i$, and $Y_c{}^k$ are calculated or predicted values for dependent variables based upon the calibration equations for instruments-i and -k, respectively, both for each member, c, from sample-c having 8 members.

$X_{jc}{}^i$, and $X_{jc}{}^k$ are second derivatives of observed absorbances for instruments i and k, respectively, both for each member, c, from sample-c at wavelength-j, where j = 1 to 3.

$X_{jc}{}^{li}$, and $X_{jc}{}^k$ are the third derivative for observed absorbances for instruments-i and -k, respectively, both for sample-c at wavelength-j, where j = 1 to 3.

The three wavelengths are the same as used in Example 1.

Seventy-two gasoline samples are analyzed on instrument-i to obtain their absorbance spectra. In addition, 25 samples of calibration transfer standards are also run. The second and third derivatives of the spectra are then made using segment lengths of 20 and gaps of 0 on NSAS (Near Infrared Spectral Analysis Software, available from NIR Systems, Inc.). The compositions of the 25 calibration transfer standards are shown in Table 7, and are specifically chosen because they encompassed the majority of variance of the 72 gasoline samples at the wavelengths used in the calibration. The 72 gasoline samples have octane in the range of 86.3 - 93.2 (R+M)/2 octane numbers and are distributed among this range in an approximate box car distribution. Each sample is analyzed four times by four different knock engine laboratories (APAL, No. 2 Control Lab, Canton Control Lab, and St. Paul Control Lab) by ASTM methods 2699 and 2700 to provide accurate estimates of (R+M)/2 octane.

The second and third derivative files of the 72 gasoline samples are sent to a mainframe computer, and a multiple linear regression in accordance with Mathematical Criterion I is performed by conventional computer programs using SAS statistics (available from SAS Institute, Inc., Cary, North Carolina) on the second derivative of absorbance at 1196, 1220, and 1236 nm and the third derivative of absorbance at 1196, 1220, and 1236 nm modeling the dependent variable of (R+M)/2 octane. Analysis of the data in this way provides a multiple linear regression model of the form:

$$Y_c^i = [(R+M)/2] \text{ octane} = A^i + B_1^i(X_{1c}^i) + B_2^i(X_{2c}^i) + B_3^i(X_{3c}^i) + C_1^i(X_{1c}^{Ii}) + C_2^i(X_{2c}^{Ii}) + C_3^i(X_{3c}^{Ii})$$

The values of the $B_i$ terms are shown in Table 2. The multiple coefficient of determination ($R^2$), multiple coefficient of correlation (R), F-value and standard error of estimate are shown in Table 2. It can be concluded from Table 2 that the calibration equation is extremely accurate.

TABLE 2

| Regression Constants Obtained for the Calibration Equation-i of the 72 Gasoline Samples | | | |
|---|---|---|---|
| Variable | Wavelength | Derivative Used | Value |
| $A^i$ | Constant | -- | 71.18951 |
| $B_1^i$ | 1220 nm | 2nd | 46.25463 |
| $B_2^i$ | 1196 nm | 2nd | -22.35057 |
| $B_3^i$ | 1236 nm | 2nd | 64.61244 |
| $C_1^i$ | 1220 nm | 3rd | -28.34514 |
| $C_2^i$ | 1196 nm | 3rd | -12.83303 |
| $C_3^i$ | 1236 nm | 3rd | -66.41106 |

| Statistical Results For the Calibration Equation-i | | | |
|---|---|---|---|
| Multiple Coefficient of Determination | Multiple Coefficient of Correlation | F-Value | Standard Error of Estimate |
| 0.9962 | 0.9980 | 2805 | 0.145 |

Next the values of the Calibration Transfer Standards are predicted from the calibration equation of instrument-i and the predicted values are used as the dependent variable ((R+M/2) octane) and the absorbance data for the Calibration Transfer Standards on instrument-k are converted to second derivative and third derivative and are used for the values of the independent variables-k to determine relevant constants-k using the classical least squares method or Mathematical Criterion I. The results are given in Table 3.

TABLE 3

| Regression Constants Obtained on Instrument-k For the 25 Calibration Transfer Standards | | | |
|---|---|---|---|
| Variable | Wavelength | Derivative Used | Value |
| $A^k$ | Intercept | -- | 55.55131 |
| $B_1^k$ | 1220 | 2nd | 178.49118 |
| $B_2^k$ | 1196 | 2nd | -47.22965 |
| $B_3^k$ | 1236 | 2nd | 130.60840 |

Continuation of the Table on the next page

TABLE 3   (continued)

| Regression Constants Obtained on Instrument-k For the 25 Calibration Transfer Standards | | | |
|---|---|---|---|
| Variable | Wavelength | Derivative Used | Value |
| $C_1{}^k$ | 1220 | 3rd | -71.70553 |
| $C_2{}^k$ | 1196 | 3rd | -50.71056 |
| $C_3{}^k$ | 1236 | 3rd | 18.43823 |

Table 4 shows the statistical data for calibration equation-k.

TABLE 4

| Statistical Data for the Calibration Transfer to Instrument-K Using the Octanes Predicted from Instrument-I | | | |
|---|---|---|---|
| Multiple Coefficient of Determination | Multiple Coefficient of Correlation | F-Value | Standard Error of Estimate |
| 0.9988 | 0.9994 | 2544 | 0.124 |

Seventy-two gasoline samples were then run on instrument-k and second and third derivative files are obtained as before. The new calibration equation from Table 3 is used to predict the (R+M)/2 octane of the 72 gasoline samples [note that these samples are identical to the original calibration set run on instrument-i] using the same octane as is used in the original calibration of instrument-i. These calculations are done on a PC using a BASIC program. The calculated octanes show a bias of -0.431 and have a standard error of prediction of 0.586. These errors are quite high considering that the original standard error of estimate on instrument-i is only 0.145. Also, it could be seen from the predicted octanes that the error for low octane predictions ((R+ M)/2 approximately equal to 86) is quite high (i.e., about -0.8) when compared to the higher octane ((R+M)/2 approximately equal to 93) predictions (e.g., much closer to zero, about 0.1). This type of behavior is similar to heteroscedasticity, in that calculated predictions tend to be erroneous by an amount that is a function of estimated octane. For example, lower octanes yielded high errors and higher octanes yielded lower errors. When the above behavior is observed, a slope and bias adjustment is warranted providing that a plot of (Y actual - Y predicted) versus octane approximates a straight line. This ordinarily is the case providing that the original calibration equation is linear or a non-linear equation transformed so as to obtain a linear relationship. From examining the data, it is clear that a slope adjustment is warranted since the relationship approximates a straight line. A PC BASIC program is used to accomplish this and shows that a slope correction for "m" of 0.86406, and a bias correction for "b" of 12.5590 is needed.

$$Y(\text{Predicted}) = \hat{Y}_c{}^k = [0.86406(A^k + \Sigma_{i=1}{}^{72}B_i{}^k X_{ic}{}^k + \Sigma_{i=1}{}^{72}C_i{}^k X_{ic}{}^{lk})] + 12.5590$$

Table 5 shows the final regression constants for instrument-k using the calibration transfer followed by the slope and bias correction.

This equation is found to have a standard error of estimate of 0.190 on instrument-k compared to instrument-i's standard error of 0.145 on the 72 gasoline samples.

TABLE 5

| Final Regression Constants for the Slope and Bias Corrected Transferred Calibration for Instrument-i | | | |
|---|---|---|---|
| Variable | Wavelength | Derivative Used | Value |
| $A^i$ | Intercept | -- | 60.55866 |
| $B_1{}^i$ | 1220 | 2nd | 154.22709 |
| $B_2{}^i$ | 1196 | 2nd | -40.80925 |
| $B_3{}^i$ | 1236 | 2nd | 112.85349 |
| $C_1{}^i$ | 1220 | 3rd | -61.95788 |
| $C_1{}^i$ | 1196 | 3rd | -43.81697 |
| $C_1{}^i$ | 1236 | 3rd | 15.93174 |

## EXAMPLE 3

This example demonstrates the slope and bias correction referred to earlier in this specification (Analytica Chemica Acta, 192(1987),197).

The various terms are as previously defined throughout this specification, the Y-term is a dependent variable calculated or predicted based upon independent variables equal to one or more spectral features identified as X-terms.

Depending upon the size or magnitude of the slope and bias corrections corresponding to m and b; where m is the slope correction and b is the bias correction, one may decide not to modify the calibration equation for the uncalibrated instrument. $\hat{Y}_c^k$ is the slope-corrected and bias-corrected value predicted for a physical property as shown hereinafter.

In the specific example $Y_c^k$, the predicted octane value from calibration equation-k, before the slope and bias correction, and $Y_c^k$, the sample measured octane (or octane predicted by a calibrated NIR instrument), are used to determine the slope and bias corrections. In the sample set that is used to do a slope and bias correction, it is necessary that the set:

1. Be representative of the range of interest for a particular property, for example, octane. The sample then should have actual octane values (measured in accordance with ASTM D2699 and D2700) approximately in the range of octane values of interest.

2. Have the octane measured for each sample, and that this actual octane value be then correlated (in effect plotted) versus the calculated octane value for each sample determined by using the calibration equation to which the slope and bias correction is to be made.

3. The number, n, of samples used for making the slope and bias correction must be 2 to define both m and b, but in the examples, 10 is usually used. $Y_c^k = A^k + \Sigma_j B_j^k X_{jc}^k$ The calibration equation for instrument-k $Y_c^a$ is the directly determined, or actually measured property; here ASTM measured octane.

4. To find m and b, solve for m and b which satisfy the following mathematical criteria:

$$\Sigma_c(Y_c^k Y_c^a) - m\Sigma_c Y_c^k Y_c^k - b\Sigma Y_c^k = 0$$

$$\Sigma_c(Y_c^a - mY_c^k - b) = 0$$

The results are:

$$m = [(\Sigma_c Y_c^a \Sigma Y_c^k)/n - \Sigma_c(Y_c^a Y_c^k)]/[\{\Sigma_c Y_c^k \Sigma_c Y_c^k\}/n - \Sigma_c Y_c^k Y_c^k]$$

$$b = 1/n\{\Sigma_c Y_c^a - m\Sigma_c Y_c^k\}$$

$$\hat{Y}_c^k = [mA^k + b] + \Sigma_j[mB_j^k X_{jc}^k]$$

## EXAMPLE 4

The mathematical treatment is changed from Multiple Linear Regression to Partial Least Squares for calibration transfer to instrument-k from instrument-i.

In this example, instrument-i is a NIR Systems 6500 bench top instrument operating in transflectance mode using fiber optics. The instrument is calibrated as shown in Example 1 using the 72 gasoline samples. The calibration is made as before modeling (R+M)/2 octane using the second derivative of absorbance at 1220, 1196 and 1236 nm as independent variables for the multiple regression calibration equation. The calibration transfer standards are the same 25 as shown in Example 5.

Instrument-k is an uncalibrated NIR Systems OL-6500 operating in transflectance mode using fiber optics. The 25 calibration transfer standards are run on this instrument using the calculated octanes, from instrument-i, as the dependent variable. This invention makes it possible to calibrate instrument-k using a different mathematical approach from that which is used on instrument-i (multiple linear regression). Partial Least Squares (PLS) is chosen as the alternative calibration method for instrument-k. The principles of PLS are well known (Harold Martens and Tormod Naes, Multivariate Calibration, John Wiley & Sons; New York, 1989 [ISBN 471-90979-3]).

PLS is accomplished by modeling the dependent variable of calculated octane for the 25 calibration standards second derivatives of absorbance over the wavelength range of 1190-1240 nm (in 2 nm intervals, i.e., 1190, 1192, 1194 ... 1240). Cross validation is accomplished using four subset groups. Models are developed using one, two, three, four, five, and six latent variables. The four latent variable model seems to provide the best estimate of pump octane for instrument-k (i.e., accounted for the most variance without overfitting the data), and a correlation of 0.9994 with instrument-i's calculated octane values. The four latent variable PLS model is used to predict the values of the first 10 samples of the original 72 sample calibration set. The predicted values show a substantial bias of -0.433 (R+M)/2 octane numbers, and a standard error of 0.468. A slope adjustment of 0.940 and an intercept adjustment of 5.77 (R+M) /2 octane numbers is made. The remaining 62 samples are predicted as unknowns. The 62 samples show a bias of 0.0156 octane numbers and a standard error of prediction of 0.153 octane numbers for the unknowns.

It should be noted that a different area of the spectra other than 1190-1240 can be chosen, provided that it is functionally related to octane with a reliability at least as good as that for measuring such octane directly. This also clearly demonstrates that the wavelengths used in calibration equation-1 need not be the same in equation 2 which shows some of the utility of the invention.

## EXAMPLE 5

This example discloses transferring a calibration equation suitable for MTBE from one refinery to another without MTBE from one knock engine to another, from one instrument after a configuration and lamp change to another instrument, with a substantially decreased error of prediction, by means of a *double* calibration transfer.

This example dramatically demonstrates a utility of the present invention. For example, instrument-k is fully calibrated using only gasolines which contained no MTBE (methyl t-butyl ether). Recently, Congress passed the reformulated fuels act and since instrument-k operates in a refinery that is in a CO (carbon monoxide) non-attainment area, the reformulated fuels act specifies that this refinery must begin adding MTBE (or some other oxygenated feedstock) to its gasoline blends at some future date. Because instrument-k is calibrated without the use of MTBE, it is expected that substantial errors would result if instrument-k's current calibration is used on unknown samples which contain MTBE. To keep from completely recalibrating instrument-k, one would want to transfer a calibration equation which can accommodate MTBE as it is added to the refineries gasoline blending stocks at a future date. In this example, instrument-k is a NIR Systems OL-6500 operating in transflectance mode using fiber optics.

A NIR Systems 6500 is chosen to operate as instrument-i because it was once calibrated using 226 samples, some of which contained MTBE, and can accommodate samples containing 0-15% by volume MTBE.

The problem is somewhat compounded by the fact that the only calibration standards run on instrument-i during its calibration with MTBE were the eight pure compounds (and calculated octanes) shown in Table 6. These eight compounds are not run on instrument-k, so a direct calibration transfer is not possible.

TABLE 6

| Isooctane | 98.59200 |
|---|---|
| n-decane | 42.46400 |
| 1-octene | 57.33100 |
| 2,3,4-trimethylpentane | 100.37100 |
| n-heptane | 58.10600 |
| Cyclohexane | 32.51100 |
| n-hexane | 66.06500 |
| Toluene | 101.69200 |

To accomplish the transfer, the eight calibration standards (Table 6) are run on instrument-i again. Since the calibration of instrument-i for the MTBE calibration, instrument-i has been changed from transmission measurements at a path length of 20mm to transflectance measurements at a path length of 18mm using fiber optics. The lamp and detector gain are changed as well.

Under the new set of conditions, using the eight calibration standards, the calibration for MTBE is transferred from instrument-i in transmission to instrument-i in transflectance. This equation, without slope and bias or other methods of error correction (e.g., least squares) is then used to calculate predicted octanes for the 25 calibration standards which are also run on instrument-i in transflectance and instrument-k in transflectance.

Multiple linear regression on the 25 calibration standards Table 7 on instrument-k using the calculated octane values as dependent variables and the second derivative of absorbance at 1220, 1196, and 1236 nm, yielded instrument-k's new calibration equation which could be used to predict the octanes of gasoline blends containing MTBE.

## TABLE 7
### Composition of Calibration Transfer Standards

| Sample | Paraffins | | Isoparaffins | | Aromatics | | | Naphthenes | Olefins |
|---|---|---|---|---|---|---|---|---|---|
| | Hexane | Heptane | 2,3-Dimethyl Butane | Isooctane | Ethylbenzene | S-Butylbenzene | T-Butylbenzene | *1,2-Dimethyl Cyclohexane | *1-Octene |
| 1 | 10% | | 35% | | | 40% | | 5% | 10% |
| 2 | 15% | | 35% | | | 40% | | 5% | 5% |
| 3 | 10% | | 40% | | | 40% | | 5% | 5% |
| 4 | 10% | | 35% | | 40% | | | 5% | 10% |
| 5 | 10% | | 35% | | 40% | | | 10% | 5% |
| 6 | 15% | | | 30% | | | 40% | 10% | 5% |
| 7 | 10% | | | 40% | | | 30% | 5% | 15% |
| 8 | 15% | | | 35% | | | 35% | 10% | 5% |
| 9 | 10% | | | 45% | | | 30% | | 15% |
| 10 | 15% | | 30% | | | | 35% | 10% | 10% |
| 11 | 10% | | 40% | | | 40% | | | 10% |
| 12 | | 15% | | 40% | | | 30% | 5% | 10% |
| 13 | 10% | | 5% | 45% | | | 25% | 5% | 10% |
| 14 | | 10% | 35% | | 40% | | | 5% | 10% |
| 15 | | 15% | | 35% | | | 35% | 10% | 5% |
| 16 | 5% | | 40% | | | 40% | | 10% | 5% |
| 17 | 10% | | 40% | | | 45% | | 5% | |
| 18 | 10% | | 20% | 20% | | 20% | 20% | 5% | 5% |
| 19 | 5% | | | 45% | | 40% | | 5% | 5% |
| 20 | 5% | | 45% | | | 40% | | 5% | 5% |
| 21 | 10% | | | 50% | | | 25% | 5% | 10% |
| 22 | 15% | | | 50% | | | 25% | 5% | 5% |
| 23 | 10% | | 5% | 50% | | | 20% | 5% | 10% |

EP 0 663 997 B1

**TABLE 7 (continued)**
**Composition of Calibration Transfer Standards**

| Sample | Paraffins | | Isoparaffins | | Aromatics | | | Naphthenes | Olefins |
|---|---|---|---|---|---|---|---|---|---|
| | Hexane | Heptane | 2,3-Dimethyl Butane | Isooctane | Ethylbenzene | S-Butylbenzene | T-Butylbenzene | *1,2-Dimethyl Cyclohexane | * 1-Octene |
| 24 | 15% | | 2,3,4-Trimethyl Pentane 30% | 10% | | 15% | 15% | 5% | 10% |
| 25 | 20% | | 2,3,4-Trimethyl Pentane 30% | 5% | | 10% | 25% | 5% | 5% |

*Note: 1,2-dimethyl cyclohexane and 1-octene are each a mixture of cis and trans isomers.

The new equation is slope and bias adjusted on ten gasoline samples. Four of these samples are premium unleaded gasoline blends [(R+M)/2 octane ≈ 92] and the remaining six are regular unleaded gasoline blends [(R+M)/2 ≈ 87)]. These samples show a bias of -0.919 and a standard error of 0.946 (R+M)/2 octane numbers.

From this data, a slope correction of 0.950 and a bias correction of 5.30 is made. The resulting equation shows a bias of 0.0401 and a standard error of prediction of 0.122 on 30 unknown gasoline samples. Some of the pertinent data is summarized below.

| SUMMARY TABLE | | | | |
|---|---|---|---|---|
| Parameter | Original Calibration on instrument-i in transmission | Equation on instrument-i for 8 calibration transfer standards in transflectance | Equations on instrument-k for 25 calibration transfer standards in transflectance | Final calibration equation on instrument-k after slope and bias correction |
| A | 87.925 | 87.318 | 86.238 | 87.226 |
| $B_1$ (1220) | 69.864 | 94.418 | 102.601 | 97.471 |
| $B_2$ (1196) | 18.581 | 23.340 | 22.488 | 21.364 |
| $B_3$ (1236) | 27.644 | 28.058 | 29.838 | 28.346 |
| Correlation with (R+M)/2 octane | 0.992 | * | 0.997 | 0.998 |
| Standard Error of Prediction | 0.330 | * | 0.946 | 0.122 |
| Bias | 0 | * | -0.919 | 0.0401 |

The Summary Table shows a very interesting phenomenon in that the transferred calibration equation is approximately two times more accurate than the original equation. This would appear to stem solely from the fact that the octanes used in the slope and bias adjustment for instrument-k are more precisely known than the calibration samples used on instrument-i.

This example also goes against a commonly held opinion of some NIR spectroscopists. These scientists believe that an equation developed for one refinery is not useful for predictions at another. In this example, the MTBE calibration for instrument-i is developed at Ashland's Catlettsburg refinery. Catlettsburg is a very complex refinery by industry standards and has 12 gasoline blending components. Instrument-k, on the other hand, analyzes data at Ashland's St. Paul Park, Minnesota, refinery which has only six gasoline blending components and is relatively much less complex. Moreover, the Catlettsburg and St. Paul Park refineries have almost no overlap in terms of crude slates.

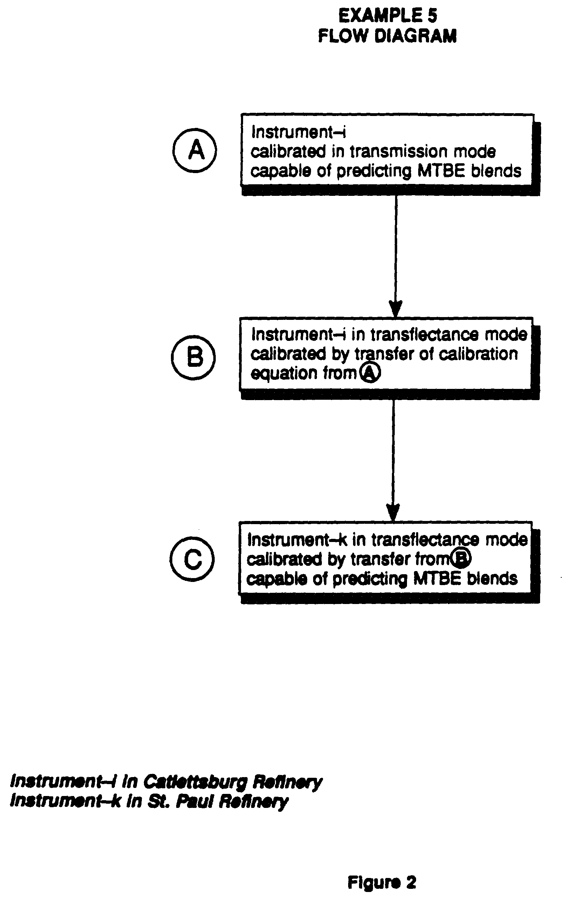

A schematic flow diagram for this example is shown in Figure 2.

**EXAMPLE 6**

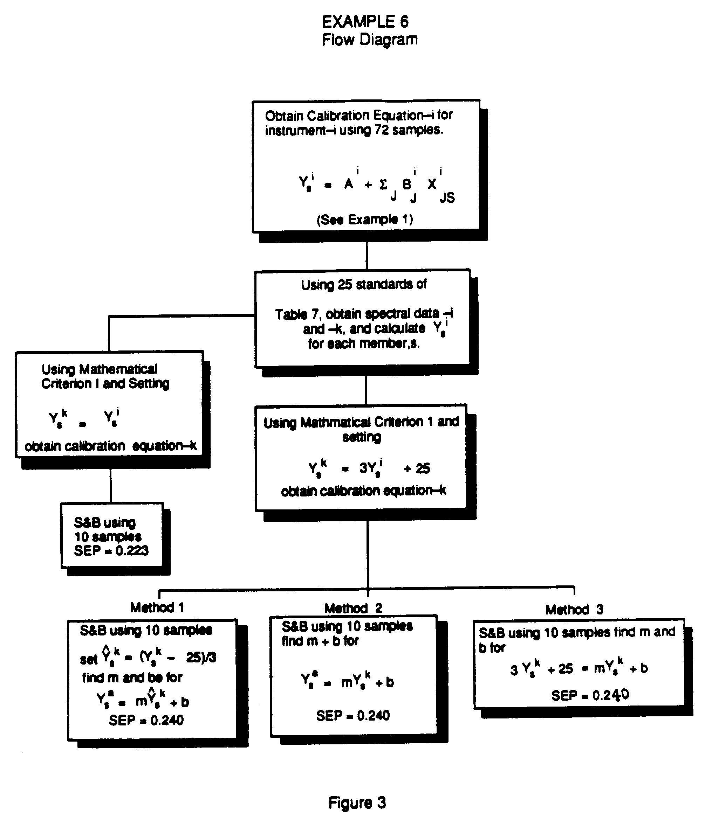

This example, schematically outlined in Figure 3, demonstrates that when $Y_{k,s}$ is a linear function of $Y_{i,s}$ that the calibration transferred equation is as effective, or approximately as effective, as the equation resulting from the direct calibration transfer of the previous examples;

(i.e., where $Y_{i,s(predicted)} = Y_{k,s(actual)}$). Here we will consider the linear function of $Y_{i,s}$ where $Y_{k,s} = 3(Y_{i,s})_{predicted} + 25$

In a previous example, an (R+M)/2 octane calibration is shown using 226 samples and predicts the (R+M)/2 octanes of 8 calibration standards (isooctane, n-decane, I-octene, 2,3,4-trimethylpentane, n-heptane, cyclohexane, n-hexane and toluene). This calibration is developed on an NIR Systems Model 6500 operating in transmission mode at a path length of 20mm.

Subsequently this instrument was configured for fiber optics using transflectance at a path length of 18mm after the lamp and detector gain setting are changed. The 8 calibration standards are run on the instrument using three times the octane value determined from the transmission measurements plus 25 as the value of the dependent variable. The results of multiple linear regression are:

$A_k = 286.951$
$B_{k,1220} = 283.252$
$B_{k,1196} = 70.020$
$B_{k,1236} = 84.185$

Values are then predicted for ten gasoline samples.

The values of the ten gasoline samples predicted are corrected by three-equivalent methods. Method one involves subtracting 25 from the value predicted for the (R+M)/2 gasoline samples, dividing the result by 3, and performing a slope and bias adjustment. Method 2 involves a slope and bias adjustment using the actually measured octane of the sample. Method three involves using three times the gasoline samples octane plus 25 for the samples used in the slope and bias adjustment and correcting the values predicted for subsequent unknowns by subtracting 25 and dividing by 3. In each of these three methods, a bias of 0.0281 and a standard error of prediction of 0.240 (R+M)/2 octane numbers is observed using an unknown set consisting of 62 unknowns.

It should be noted that the final equation for the direct calibration transfer ($Y_{i,s}$ predicted = $Y_{k,s\ actual}$) shows a somewhat lower error and bias than by either of the previous methods (bias = 0.0237, SEP = 0.223 (R+M)/2 octane numbers). $Y_{k,s\ actual}$ multiplied by a constant with some other constant added to it yielded a value for the dependent variable for the transfer that had an effect on the error term ($Y_{k,s\ predicted}$ - $Y_{i,s\ actual}$) which is not removed exactly by either the inverse mathematical function or slope and bias adjustment.

However, if we generate the calibration transfer equation (without slope and bias adjustment) and multiply the regression constants ($A_k$, $B_{k,1220}$, $B_{k,1196}$, and $B_{k,1236}$) by three and add 25 to $A_k$, we can arrive at the exact answer that the direct method ($Y_{k,s\ predicted}$ = $Y_{i,s\ actual}$) yields after using a slope and bias adjustment using the actual (R+M)/2 octanes of the ten samples or by slope and bias adjusting the equation using three times the value of octane plus 25 and subtracting 25 from each predicted octane and dividing by 3.

## EXAMPLE 7

A calibration equation for an uncalibrated instrument is obtained based upon the calibration equation established for a reference instrument. Solutions for the following equations determine: $B_j^{k}$,s and $A^k$ in the linear calibration equation for instrument-k, the uncalibrated instrument, having the form: $Y_c^k = A^k + \Sigma_j B_j^{k} X_{jc}^k$; and which relies on or has recourse to the calibration equation: $Y_c^i = A^i + \Sigma_j B_j^{i} X_{jc}^i$; for the calibrated or reference instrument, instrument-i.

Mathematical Criterion I, a classical least squares is used. But, since only three wavelengths are used, J = 1 to 3; and since 4 = total number of members in sample-c, c = 1 to 4. Independent variables, $X_{jc}^k$, (where "k" identifies instrument-k) have values for spectral features derived from the spectral response of instrument-k at wavelength-j. Each wavelength-j is within the wavelength range of from 800 to 2500 nm. Here the spectral features are the second derivative of the absorbance determined at three wavelengths-J: 1196, 1220, and 1286 nm.

Mathematical Criterion I

$$\Sigma_c(Y_c^{i} - A^{k} - \Sigma_j B_j^{k} X_{jc}^{k}) = 0; \qquad \text{Assume } Y_c^{i} = Y_c^{k}$$

$$\Sigma_c Y_c^{i} X_{1c}^{k} - A^{k} \Sigma_c X_{1c}^{k} - B_1^{k} \bullet \Sigma_c X_{1c}^{k} X_{1c}^{k} - B_2^{k} \bullet \Sigma_c X_{2c}^{k} X_{1c}^{k} - B_3^{k} \bullet \Sigma_c X_{3c}^{k} X_{1c}^{k} = 0;$$

$$\Sigma_c Y_c^{i} X_{2c}^{k} - A^{k} \Sigma_c X_{2c}^{k} - B_1^{k} \bullet \Sigma_c X_{1c}^{k} X_{2c}^{k} - B_2^{k} \bullet \Sigma_c X_{2c}^{k} X_{2c}^{k} - B_3^{k} \bullet \Sigma_c X_{3c}^{k} X_{2c}^{k} = 0; \text{ and}$$

$$\Sigma_c Y_c^{i} X_{3c}^{k} - A^{k} \Sigma_c X_{3c}^{k} - B_1^{k} \bullet \Sigma_c X_{1c}^{k} X_{3c}^{k} - B_2^{k} \bullet \Sigma_c X_{2c}^{k} X_{3c}^{k} - B_3^{k} \bullet \Sigma_c X_{3c}^{k} X_{3c}^{k} = 0$$

Note in Mathematical Criterion I, the form of the calibration equation for the reference instrument-i need not be the same as that for the uncalibrated instrument-k.

Even after both changing a bulb which would ordinarily change the spectral characteristics of an instrument, and also reconfiguring the instrument for fiber optics operating in transflectance mode at a different path length, it was possible to recalibrate such instrument by means of the steps of this invention.

A calibration is developed on instrument-i for pump octane. The calibration set consists of 226 samples. These samples are analyzed on instrument-i and a multiple linear regression is performed modeling (R+M)/2 octane at the second derivative of absorbance at 1220, 1196, and 1236 nm. Instrument-i is operating in transmission mode using a total path length of 20 mm. The regression constants obtained are:

$A^i$ = 87.925
$B_1{}^i$ = 69.864
$B_2{}^i$ = 18.581
$B_3{}^i$ = 27.644

The standard error of estimate for the equation is 0.330. It should be pointed out that these results are from two different knock engine operators running samples on the same knock engines. These results are considered to be good since the ASTM allowable limits for (R+M)/2 are a standard error of estimate of approximately 0.35. These samples were in an approximate box-car distribution from 84-94 (R+M)/2 octane.

Based on the multiple regression calibration equation values are predicted for four calibration transfer standards. These standards and their calculated (R+M)/2 octanes are shown below.

| Substance | Calculated Octane |
|---|---|
| Isooctane | 98.592 |
| n-decane | 42.464 |
| I-octene | 57.331 |
| 2,3,4-trimethylpentane | 100.371 |

It should also be pointed out that instrument-i is calibrated over a four-month period (i.e., samples were run as they came into the lab) and this is not an optimal way to do a calibration. Also not optimal was the fact that these calibration standards were not run on the instrument promptly after or substantially at the same time as the initial calibration, but not until more than one month after the calibration was completed.

Subsequent to this, the lamp on instrument-i burns out and a new lamp is inserted. The instrument is also configured for fiber optics operating in transflectance mode at a different total path length ($\sim$ 18 mm). In addition to the configuration mode and path length changes, the detector gain has to be changed to accommodate the new lamp and lower throughput of the fiber optic configuration (as opposed to transmission).

The calibration transfer standards are rerun on instrument-i and a transferred calibration equation is developed modeling calculated octane as a function of the second derivative of absorbance at 1220, 1196, and 1236 nm. The regression constants obtained were:

$$A^k = 87.717$$
$$B_1{}^k = 92.471$$
$$B_2{}^k = 24.079$$
$$B_3{}^k = 32.054$$

$B_1{}^k$ is very different from $B_1{}^i$ whereas $A^k$, $B_2{}^k$ and $B_3{}^k$ are within 6 (R+M)/2 octane numbers from $A^i$, $B_2{}^i$ and $B_3{}^i$, respectively.

Subsequently, 97 samples are analyzed for (R+M)/2 octane. None of these samples are the same as before. Furthermore they are analyzed by multiple operators on different knock engines from those used before. The calibration transfer equation yields a slight bias of 0.0392 (R+M)/2 octane numbers (note that the bias between two different knock engines is commonly much higher than this) and a standard error of estimate of 0.371 (R+M)/2 octane numbers. A slope and bias adjustment is made using two samples; one at 87.4 octane and one at 92.5 octane, and yields a slope correction of 0.9402 and intercept correction or bias correction of 5.297 and a final equation of:

$$A^k = 87.774$$
$$B_1{}^k = 86.945$$
$$B_2{}^k = 22.640$$
$$B_3{}^k = 30.139$$

The slope and bias adjusted equation has a bias of 0.0 and a standard error of prediction of 0.343.

To demonstrate that this could not be accomplished directly from the original calibration equation from transmission data, the original calibration equation is used to predict the (R+M)/2 octane for each of the 97 gasoline samples. The result shows a bias of -0.482 octane. A slope and bias adjustment only using all 97 samples on this original calibration equation shows a bias of 0 and a standard error of estimate of 1.96 (R+M)/2 octane.

Also note that the two point slope and bias adjustment can also be visualized as a generalized least sum error reducing step in the sense that it can be done equivalently using techniques of geometry. For example, defining a line extending through the actual values measured, one can determine constants to multiply the line extending between the values predicted before the adjustment in such a manner as to make the two lines equivalent. Hence this is generalized least sum because the approach does not use squares.

## MODIFICATIONS

Specific compositions, methods or embodiments discussed are intended to be only illustrative of the invention disclosed by this specification. Variations on these compositions, methods or embodiments are readily apparent to a person of skill in the art based upon the teachings of this specification and are therefore intended to be included as part of the invention disclosed herein.

For example, an equivalent method to those disclosed in the examples, intended to be within the claimed scope of this invention, is determining the bias value for, for example, $A^k$ in calibration equation-k for instrument-k based upon calibration equation-i for instrument-i, wherein the value for $A^i$ is assumed to be equal to some arbitrary value, such as zero, or a value determined in connection with $A^i$ and a function of $A^i$; i.e., a partially calibrated instrument. The "correct" value for $A^k$, is that value which when used in a calibration equation-k determines the value for a dependent variable-k, which is substantially equal to the actual value of a physical or chemical property desired. The "correct" value for $A^k$ can be obtained from employing a slope and bias correction to that equation which resulted from employing an arbitrary value for $A^i$ or a value determined by some function of $A^i$. Another equivalent method like above occurs when the final equation that would otherwise result from a slope and bias equation may be disguised by using a function of either $m$ or $b$, (the terms discussed in Example 6). This will clearly change the calculated or predicted value for the dependent variable. However, just as was shown in the specification that a function of $Y^iS$ from calibration equation-i can be used, so also can a function of $m$ or $b$ be used and then the resulting dependent variable transformed back to a value that will be substantially equal to the actual value for a chemical or physical property of interest.

Still another variation within the scope of this invention involves how values are assigned to dependent variable-k. These values for dependent variable-k, that can be used to determine constants-k in calibration equation-k or for performing a slope and bias correction, can be determined without using a primary test method but instead by reference to calibration equation-i and spectral data-i obtained from instrument-i or possibly any other calibrated instrument in conjunction with its corresponding calibration equation which involves substantially the same range of interest and relevant spectral data.

Still another variation of this invention is to use different spectral features in calibration equation-i from those in calibration equation-k, e.g., different wavelengths or different mathematical transforms or both; provided such differences are each correlatable to a physical or chemical property of interest.

Reference to documents made in the specification is intended to result in such patents or literature being expressly incorporated herein by reference, including any patents or other literature references cited within such documents.

In most examples, only three wavelengths were used. The number, however, can vary depending upon the statistical reliability sought or required. If the indirect method has an SEP of "v" for some property which is smaller than the interval of reliability for the direct method for determining such property, then there is a practical limit to how small it is reasonable to seek to make "v", and how many wavelengths should be required.

Another modification relates to the spectral features which can be derived from absorption spectra. In the examples, both second and higher derivatives of intensities versus wavelengths or absorbances, were used. Clearly, higher derivatives such as first, second, third, fourth, and fifth or higher are also expressly contemplated for this invention. Values for a spectral feature can equal simply the value found for a particular wavelength, or a range of wavelengths around some reference wavelength; e.g., absorbances. Spectral features are not intended to suggest that the spectral data is necessarily different in value from a spectral feature. It is clearly contemplated that it may be more complicated in that a linear combination of spectral features or mathematical transforms thereof are within the intended scope of this invention.

Also contemplated as a variation of this invention is a linear combination of still higher adjacent order derivatives, such as third and fourth order derivatives or higher adjacent order derivatives, of spectral data. See Example 5 for an example.

Further, any set of members or range of numbers cited in the specification is intended to incorporate expressly herein any member or number falling within such set or range, respectively, including any subset or range within any set or range cited.

**Claims**

1. A method for calibrating a spectral instrument to determine a value of a property of an unknown sample by using constants in a calibration equation-2, for said instrument, by reference to a spectral instrument having a calibration equation-1, said method comprising in any order:

(a) Determining from calibration equation-1 a value of a dependent variable-1 corresponding to each member of a set of calibration transfer standards based on spectral data-1 for each member of said set of calibration transfer standards; and

(b) Determining constants-2 in said calibration equation-2 so as to minimize the sum of absolute differences between:

(1) Each said value of dependent variable-2 for each member of said set of calibration transfer standards using spectral data-2 measured by said instrument; and

(2) That corresponding value of dependent variable-1 determined for each member of said set of calibration transfer standards determined by calibration equation-1.

(c) Determining values of said property in said unknown sample by use of said instrument.

2. A method for calibrating a second spectral instrument to determine a value of a property of an unknown sample by using constants in a calibration equation-2, for said second instrument, by reference to a first spectral instrument having a calibration equation-1, said method comprising in any order:

(a) Determining from calibration equation-1 a value of a dependent variable-1 corresponding to each member of a set of calibration transfer standards based on spectral data-1 for each member of said set of calibration transfer standards measured by means of instrument-1; and

(b) Determining constants-2 in said calibration equation-2 so as to minimize the sum of absolute differences between:

(1) Each said value of dependent variable-2 for each member of said set of calibration transfer standards using spectral data-2 measured by said second instrument; and

(2) That corresponding value of dependent variable-1 determined for each member of said set of calibration transfer standards measured by said first instrument.

(c) Determining values of said property in said unknown sample by use of said second instrument.

3. A method for calibrating or recalibrating a first instrument, instrument-1, by reference to a second instrument, instrument-2, over a range of valued for a property of interest comprising in any order:

(a) obtaining spectral data by means of instrument-1 and instrument-2, corresponding respectively to data-1 and data-2 for each member of a set of calibration transfer standards;

(b) determining by means of a calibration equation, calibration equation-1, of said instrument-1, a value for a dependent variable, dependent variable-1, corresponding to each member of said set of calibration transfer standards;

(c) determining a value for dependent variable-2 that is relatable by a function-f to said property of interest, for each member of the set of calibration transfer standards;

(d) selecting values for said constants-1 in calibration equation-1 so that the sum of absolute differences between:

(1) each dependent variable-1 estimated by said calibration-1 with said selected constants-1 and data-1 for each member of said set of calibration transfer standards; and

(2) corresponding dependent variable-2 for identical members of said set of calibration transfer standards,

is substantially minimized.

4. A method according to Claim 1, 2 or 3, wherein said set of calibration transfer standards have values of said dependent variable which are different from the value of said dependent variable which would be obtained by a primary reference test method, and wherein said set of calibration transfer standards have compositions different from the composition of said sample, and wherein the determining of constants-2 is by a method which comprises:

(a) partial least squares;

(b) multiple linear regression; and/or

(c) principal component regression.

5. A method according to Claim 1, 2 or 3, wherein said spectral data-1 and the spectral data-2 comprise infrared spectral data, and wherein said sample comprises liquid, and wherein said sample comprises liquid, and wherein said set of calibration transfer standards comprises at least one composition different from those used to calibrate instrument-1.

6. A method according to Claim 1, wherein said set of calibration transfer standards comprises at least one standard which is a pure compound or mixture of pure compounds.

7. A method according to Claim 1, wherein said set of calibration transfer standards have at least one member that yields spectral data-2 when measured by instrument-2 which in conjunction with calibration equation-2 determines a value for said dependent variable-2 for said at least one member which is indicative of a value which is significantly different from that value determined by a direct test method for which said calibration equation-1 and calibration equation-2 were established to model.

8. A method according to Claim 1, wherein calibration equation-2 has the following form:

$$Y^2_s = A^2 + \Sigma_j \, (B^s_j \bullet I^s_{js})$$

wherein:

$Y^1_s$ is dependent variable-1 for sample member s, based upon calibration equation-1 for instrument-1;
$Y^2_s$ is dependent variable-2 for sample member s;
$A^2$ is an intercept constant-2
$B^2_j$ is a slope constant-2 for every sample member s at wavelength
$I^2_{js}$ is an independent variable determined from spectral data-2 corresponding to sample member s at wavelength j;

and said minimization of said absolute differences is achieved by substantially minimizing the following mathematical expression:

$\Sigma_s \, \{Y^1_s - A^2 - \Sigma_j \, (B^2_j \bullet I^2_{js})\}^2$; and wherein said independent variable is determined from spectral data-2 by taking a mathematical transform of absorbance, and wherein said mathematical transform comprises a differential of an absorbance spectra.

9. A method according to any preceding claim, wherein there is a further improvement of applying a slope and bias correction, whereby the accuracy of dependent variable, $Y^1_s$, is increased to $\hat{Y}^1_s$, comprising the step of substituting values for m and b into the following expression:

$$\hat{Y}^1_s = \{m \times A(1) + b\} + \Sigma_j \, \{m \times B^1_j \times I^1_{js}\}$$

wherein m and b are defined by the following expressions:

$$m = \{(\Sigma_c Y_c^a \Sigma Y_c^k)/n - \Sigma_c(Y_c^a Y_c^k)\}/\{\{\Sigma_c Y_c^k \Sigma_c Y_c^k\}/n - \Sigma_c Y_c^k Y_c^k\}$$

$$b = 1/n(\Sigma_c Y_c^a - m\Sigma_c Y_c^k\}$$

where:

Dependent-variable-(ac), $Y^a_c$, is selected from the group of values consisting of: a directly determined value for property-p of a member c; a predicted value for property-p of member c, by means of a calibration equation for property-p within a range said calibration equation is established to model; wherein each value for said property-p is in a range that said calibration equation-1 was established to model; and a combination thereof; and

n is the number of members to a set of slope and bias samples that yield calculated values indicative of values within a range that said calibration equation-1 is intended to model.

10. A method according to Claim 1 through 8, wherein there is a further improvement comprising an error reducing step.

**Patentansprüche**

1. Verfahren zum Kalibrieren eines Spektralinstruments zum Bestimmen eines Werts einer Eigenschaft einer unbekannten Probe durch Verwenden von Konstanten in einer Kalibriergleichung-2 für das Instrument durch Bezugnahme auf ein Spektralinstrument, das eine Kalibriergleichung 1 hat, wobei das Verfahren in irgendeiner Reihenfolge folgendes umfaßt:

   (a) Bestimmen aus der Kalibriergleichung-1 eines Werts einer abhängigen Variablen-1 entsprechend jedem Glied eines Satzes von Kalibrierübertragungsstandards basierend auf Spektraldaten-1 für jedes Glied des Satzes von Kalibrierübertragungsstandards; und

   (b) Bestimmen von Konstanten-2 in der Kalibriergleichung-2 so, daß die Summe der Absolutdifferenzen zwischen:

   (1) jedem genannten Wert der unabhängigen Variablen-2 für jedes Glied des Satzes von Kalibrierübertragungsstandards unter Verwendung von durch das Instrument gemessenen Spektraldaten-2; und

   (2) jenem entsprechenden Wert der abhängigen Variablen-1, der für jedes Glied des Satzes von Kalibrierübertragungsstandards, die durch die Kalibriergleichung-I bestimmt worden sind, bestimmt worden ist,

   minimiert wird;

   (c) Bestimmen der Werte der genannten Eigenschaft in der unbekannten Probe durch Verwendung des Instruments.

2. Verfahren zum Kalibrieren eines zweiten Spektralinstruments zum Bestimmen eines Werts einer Eigenschaft einer unbekannten Probe durch Verwenden von Konstanten in einer Kalibriergleichung-2 für das zweite Instrument durch Bezugnahme auf ein erstes Spektralinstrument, das eine Kalibriergleichung-I hat, wobei das Verfahren in irgendeiner Reihenfolge folgendes umfaßt:

   (a) Bestimmen aus der Kalibriergleichung-1 eines Werts einer abhängigen Variablen-1 entsprechend jedem Glied eines Satzes von Kalibrierübertragungsstandards basierend auf Spektraldaten-I für jedes Glied des Satzes von Kalibrierübertragungsstandards, die mittels des Instruments-1 gemessen worden sind; und

   (b) Bestimmen von Konstanten-2 in der Kalibriergleichung-2 so, daß die Summe der Absolutdifferenzen zwischen:

   (1) jedem genannten Wert der unabhängigen Variablen-2 für jedes Glied des Satzes von Kalibrierübertragungsstandards unter Verwendung von durch das zweite Instrument gemessenen Spektraldaten-2; und

   (2) jenem entsprechenden Wert der unabhängigen Variablen-1, der für jedes Glied des Satzes von Kalibrierübertragungsstandards, die durch das erste Instrument gemessen worden sind, bestimmt worden ist,

   minimiert wird;

   (c) Bestimmen der Werte der genannten Eigenschaft in der unbekannten Probe unter Verwendung des zweiten Instruments.

3. Verfahren zum Kalibrieren oder Wiederkalibrieren eines ersten Instruments, Instrument-1, durch Bezugnahme auf ein zweites Instrument, Instrument-2, über einen Bereich von Werten für eine Eigenschaft von Interesse, umfassend in irgendeiner Reihenfolge:

   (a) Erhalten von Spektraldaten mittels des Instruments-1 und Instruments-2 entsprechend jeweils Daten-1 und Daten-2 für jedes Glied eines Satzes von Kalibrierübertragungsstandards;

   (b) Bestimmen mittels einer Kalibriergleichung, Kalibriergleichung-I, des Instruments-1 einen Wert für eine abhängige Variable, abhängige Variable-1, entsprechend jedem Glied des genannten Satzes von Kalibrierübertragungsstandards;

(c) Bestimmen eines Werts für die abhängige Variable-2, der durch eine Funktion-f mit der Eigenschaft von Interesse in Beziehung setzbar ist, für jedes Glied des Satzes von Kalibrierübertragungsstandards;

(d) Auswählen von Werten für die genannten Konstanten-1 in der Kalibriergleichung-1 so, daß die Summe der Absolutdifferenzen zwischen:

(1) jeder abhängigen Variablen-1, die mittels der Kalibrierung-1 mit den gewählten Konstanten-1 und Daten-1 für jedes Glied des Satzes von Kalibrierübertragungsstandards berechnet bzw. veranschlagt worden ist; und

(2) einer entsprechenden abhängigen Variablen-2 für identische Glieder des Satzes von Kalibrierübertragungsstandards

im wesentlichen minimiert wird.

4. Verfahren gemäß Anspruch 1, 2 oder 3, worin der Satz von Kalibriertransferstandards Werte der abhängigen Variablen hat, welche unterschiedlich von dem Wert der abhängigen Variablen sind, der durch ein Primärbezugstestverfahren erhalten werden würde, und worin der Satz von Kalibrierübertragungsstandards Zusammensetzungen hat, die unterschiedlich von der Zusammensetzung der Probe sind, und worin das Bestimmen der Konstanten-2 durch ein Verfahren erfolgt, welches folgendes umfaßt:

(a) partial kleinste Quadrate;

(b) multiple lineare Regression; und/oder

(c) prinzipielle Komponentenregression.

5. Verfahren gemäß Anspruch 1, 2 oder 3, worin die Spektraldaten-I und die Spektraldaten-2 Infrarotspektraldaten umfassen, und worin die Probe Flüssigkeit umfaßt, und worin der Satz von Kalibrierübertragungsstandards wenigstens eine Zusammensetzung umfaßt, die unterschiedlich von jenen ist, die zum Kalibrieren des Instruments-1 verwendet werden.

6. Verfahren gemäß Anspruch 1, worin der Satz von Kalibrierübertragungsstandards wenigstens ein Standard umfaßt, welches eine reine Verbindung oder Mischung von reinen Verbindungen ist.

7. Verfahren gemäß Anspruch 1, worin der Satz von Kalibrierübertragungsstandards wenigstens ein Glied hat, das Spektraldaten-2 ergibt, wenn mittels des Instruments-2 gemessen wird, welches in mit Verbindung der Kalibriergleichung-2 einen Wert für die abhängige Variable-2 für das genannte wenigstens eine Glied bestimmt, welcher indikativ für einen Wert ist, der signifikant unterschiedlich von jenem Wert ist, welcher durch ein direktes Testverfahren bestimmt wird, wofür die Kalibriergleichung-I und die Kalibriergleichung-2 zum Bilden aufgestellt wurden.

8. Verfahren gemäß Anspruch 1, worin die Kalibriergleichung-2 die folgende Form hat:

$$Y^2_s = A^2 + \Sigma_j (B^s_j \bullet I^s_{js})$$

worin:

$Y^1_s$ die abhängige Variable-1 für das Probenglied s, basierend auf der Kalibriergleichuung-1 für das Instrument-1 ist;
$Y^2_s$ die abhängige Variable-2 für das Probenglied s ist;
$A^2$ eine Abschnittskonstante-2 ist;
$B^2_j$ eine Neigungskonstante-2 für jedes Probenglied s bei der Wellenlänge j ist;
$I^2_{js}$ eine unabhängige Variable ist, die aus Spektraldaten-2 entsprechend dem Probenglied s bei der Wellenlänge j bestimmt worden ist;

und die genannte Minimierung der genannten Absolutdifferenzen dadurch erhalten wird, daß im wesentlichen der folgende mathematische Ausdruck minimiert wird:
$\Sigma_s \{Y^1_s - A^2 - \Sigma_j (B^2_j \bullet I^2_{js})\}^2$; und worin die genannte unabhängige Variable aus den Spektraldaten-2 dadurch bestimmt wird, daß man eine mathematische Transformation der Absorbanz bzw. Absorptionsfähigkeit nimmt, und worin die mathematische Transformation ein Differential von einem Absorbanz- bzw. Absorptionsfähigkeitsspektrum umfaßt.

9. Verfahren gemäß irgendeinem vorhergehenden Anspruch, worin eine weitere Verbesserung des Anwendens einer Schräge-bzw. Richtungskoeffizienten und Neigungskorrektur vorgesehen ist, wodurch die Genauigkeit der abhängigen Variablen $Y^1{}_s$ auf $\hat{Y}^1{}_s$ erhöht wird, umfassend den Schritt des Substituierens von Werten für m und b in den folgenden Ausdruck:

$$Y^1{}_s = \{m \times A(1) + b\} + \Sigma_i \{m \times B^1{}_j \times I^1{}_{js}\}$$

worin m und b durch die folgenden Ausdrücke definiert sind:

$$m = \{(\Sigma_c Y_c{}^a \; \Sigma Y_c{}^k)/n - \Sigma_c (Y_c{}^a \; Y_c{}^k)\}/\{\{\Sigma_c Y_c{}^k \; \Sigma_c Y_c{}^k\}/n - \Sigma_c Y_c{}^k \; Y_c{}^k\}$$

$$b = 1/n\{\Sigma_c Y_c{}^a - m\Sigma_c Y_c{}^k\}$$

worin:

die abhängige-Variable-(ac), $Y^a{}_c$, aus der Gruppe von Werten ausgewählt ist, die besteht aus: einem direktbestimmten Wert für die Eigenschaft-p eines Glieds c; einem vorhergesagten Wert für die Eigenschaft-p des Glieds c, und zwar mittels einer Kalibriergleichung für die Eigenschaft-p innerhalb eines Bereichs, für welchen die Kalibriergleichung zur Bildung aufgestellt ist; worin jeder Wert für die Eigenschaft-p in einem Bereich ist, für den die Kalibriergleichung-1 zum Bilden aufgestellt wurde; und eine Kombination hiervon; und

n die Anzahl von Gliedern für einen Satz von Schräge- bzw. Richtungskoeffizienten und Neigungsproben ist, die errechnete Werte ergeben, welche für Werte innerhalb eines Bereichs indikativ sind, für dessen Bildung die Kalibriergleichung-1 bestimmt ist.

10. Verfahren gemäß Anspruch 1 bis 8, worin eine weitere Verbesserung vorhanden ist, die einen Fehlerverminderungsschritt umfaßt.

**Revendications**

1. Un procédé d'étalonnage d'un instrument spectral pour déterminer la valeur d'une propriété d'un échantillon inconnu en utilisant des constantes d'une équation-2 d'étalonnage pour ledit instrument, par référence à un instrument spectral présentant une équation-1 d'étalonnage, ledit procédé comprenant dans un ordre quelconque :

(a) La détermination d'après l'équation-1 d'étalonnage de la valeur d'une variable-1 dépendante, correspondant à chaque élément d'un Jeu de standards de transfert d'étalonnage sur la base de données-1 spectrales pour chaque élément dudit jeu de standards de transfert d'étalonnage ; et

(b) La détermination des constantes-2 dans ladite équation-2 d'étalonnage de manière à minimiser la somme des différences absolues entre :

(1) Chaque valeur de la variable-2 dépendante pour chaque élément dudit jeu de standards de transfert d'étalonnage en utilisant des données-2 spectrales mesurées par ledit instrument ; et

(2) La valeur correspondante de la variable-1 dépendante déterminée pour chaque élément dudit jeu de standards de transfert d'étalonnage déterminé par l'équation-1 d'étalonnage :

(c) La détermination des valeurs de ladite propriété dans ledit échantillon inconnu par l'utilisation dudit instrument.

2. Un procédé d'étalonnage d'un second instrument spectral pour déterminer la valeur d'une propriété d'un échantillon inconnu en utilisant des constantes d'une équation-2 d'étalonnage, pour ledit second instrument, par référence à un premier instrument spectral ayant une équation-1 d'étalonnage, ledit procédé comprenant dans un ordre quelconque :

(a) La détermination, d'après l'équation-1 d'étalonnage, de la valeur d'une variable-1 dépendante correspondant à chaque élément d'un jeu de standards de transfert d'étalonnage sur la base de données-1 spectrales pour chaque élément dudit jeu de standards de transfert d'étalonnage mesuré au moyen de l'instrument-1 ; et

(b) La détermination des constantes-2 dans ladite équation-2 d'étalonnage de manière à minimiser la somme des différences absolues entre :

(1) Chaque valeur de la variable-2 dépendante pour chaque élément dudit jeu de standards de transfert d'étalonnage en utilisant des données-2 spectrales mesurées par ledit second instrument ; et

(2) La valeur correspondante de la variable-1 dépendante déterminée pour chaque élément dudit jeu de standards de transfert d'étalonnage mesuré par ledit premier instrument ;

(c) La détermination des valeurs de ladite propriété dans ledit échantillon inconnu par l'utilisation dudit second instrument.

3. Un procédé d'étalonnage ou de re-étalonnage d'un premier instrument, à savoir un instrument-1, par référence à un second instrument, à savoir un instrument-2, sur une gamme de valeur pour une propriété recherchée comprenant dans un ordre quelconque :

(a) l'obtention de données spectrales au moyen de l'instrument-1 et de l'instrument-2, correspondant respectivement à des données-1 et à des données-2 pour chaque élément d'un jeu de standards de transfert d'étalonnage ;

(b) la détermination, au moyen d'une équation d'étalonnage, à savoir équation-1 d'étalonnage dudit instrument-1, d'une valeur pour une variable dépendante, à savoir variable-1 dépendante, correspondant à chaque élément dudit jeu de standards de transfert d'étalonnage ;

(c) la détermination d'une valeur pour la variable-2 dépendante qui est reliée par une fonction-f à ladite propriété recherchée, pour chaque élément dudit jeu de standards de transfert d'étalonnage ;

(d) le choix de valeurs pour lesdites constantes-1 dans l'équation-1 d'étalonnage pour que la somme des différences absolues entre :

(1) chaque variable-1 dépendante estimée par ledit étalonnage-1 avec lesdites constantes-1 et données-1 choisies pour chaque élément dudit jeu de standards de transfert d'étalonnage ; et

(2) une variable-2 dépendante et correspondante pour des éléments identiques dudit jeux de standards de transfert d'étalonnage,

soit sensiblement minimisée.

4. Un procédé selon la revendication 1, 2 ou 3, dans lequel ledit jeu de standards de transfert d'étalonnage présente des valeurs de ladite variable dépendante qui sont différentes de la valeur de ladite variable dépendante qui serait obtenue par un procédé d'essai de référence primaire, et dans lequel ledit jeu de standards de transfert d'étalonnage présente des compositions différentes de la composition dudit échantillon, et dans lequel la détermination des constantes-2 est effectuée par un procédé qui comprend :

(a) les moindres carrés partiels ;

(b) la régression linéaire multiple ; et/ou

(c) la régression composante principale.

5. Un procédé selon la revendication 1, 2 ou 3, dans lequel lesdites données-1 spectrales et les données-2 spectrales comprennent des données spectrales infrarouges, et dans lequel ledit échantillon comprend un liquide, et dans lequel ledit jeu de standards de transfert d'étalonnage comprend au moins une composition différente de celles utilisées pour étalonner l'instrument-1.

6. Un procédé selon la revendication 1, dans lequel ledit jeu de standards de transfert d'étalonnage comprend au moins un standard qui est un composé pur, ou un mélange de composés purs.

7. Un procédé selon la revendication 1, dans lequel ledit jeu de standards de transfert d'étalonnage présente au moins un élément qui donne des données-2 spectrales dans une mesure par l'instrument-2, ce qui, en liaison avec l'équation-2 d'étalonnage, détermine une valeur pour ladite variable-2 dépendante pour ledit au moins un élément qui est indicatif d'une valeur qui est significativement différente de la valeur déterminée par un procédé d'essai direct pour lequel ladite équation-1 d'étalonnage et ladite équation-2 d'étalonnage ont été établies pour modèle.

8. Un procédé selon la revendication 1, dans lequel l'équation-2 d'étalonnage présente la forme suivante :

$$Y^2{}_s = A^2 + \Sigma_j \, (B^s{}_j \bullet I^s{}_{js})$$

où :

$Y^1{}_s$ est une variable-1 dépendante pour l'élément s d'échantillon, sur la base de l'équation-1 d'étalonnage pour l'instrument-1 ;

$Y^2{}_s$ est une variable-2 dépendante pour l'élément s d'échantillon ;

$A^2$ est une constante-2 d'interception ;

$B^2{}_j$ est une constante-2 de pente pour chaque élément s d'échantillon à la longueur d'onde j ;

$I^2{}_{js}$ est une variable indépendante déterminée d'après les données-2 spectrales correspondant à l'élément s d'échantillon à la longueur d'onde j ;

et ladite minimisation des différences absolues est obtenue en minimisant sensiblement l'expression mathématique suivante :

$\Sigma_s \, (Y^1{}_s - A^2 - \Sigma_j \, (B^2{}_j \bullet I^2{}_{js})^2$; et dans lequel ladite variable indépendante est déterminée d'après des données-2 spectrales en prenant une transformée mathématique de l'absorbance, et dans lequel ladite transformée mathématique comprend une différentielle d'un spectre d'absorbance.

9. Un procédé selon une revendication précédente quelconque, dans lequel un perfectionnement supplémentaire consiste à appliquer une correction de pente et de déviation, de sorte que la précision de la variable dépendante $Y^1{}_s$ est augmentée à $\hat{Y}^1{}_s$, comprenant l'opération consistant à substituer des valeurs pour m et b dans l'expression ci-après :

$$\hat{Y}^1{}_s = \{m \times A(1) + b\} + \Sigma_j \, \{m \times B^1{}_j \times I^1{}_{js}\}$$

dans laquelle m et b sont définis par les expressions ci-après :

$$m = \{(\Sigma_c Y_c{}^a \, \Sigma Y_c{}^k)/n - \Sigma_c(Y_c{}^a \, Y_c{}^k)\}/\{\{\Sigma_c Y_c{}^k \, \Sigma_c Y_c{}^k\}/n - \Sigma_c Y_c{}^k \, Y_c{}^k\}$$
$$b = 1/n\{\Sigma_c Y_c{}^a - m\Sigma_c Y_c{}^k\}$$

où :

La variable $y^a{}_c$ dépendante de (ac) est choisie parmi le groupe de valeurs comprenant : une valeur déterminée directement pour la propriété-p d'un élément c ; une valeur prévue pour la propriété-p de l'élément c, au moyen d'une équation d'étalonnage pour la propriété-p à l'intérieur d'une gamme où ladite équation d'étalonnage est établie pour modèle ; dans lequel chaque valeur pour ladite propriété-p se trouve dans une gamme où ladite équation-1 d'étalonnage a été établie pour modèle ; et une combinaison de celles-ci ; et

n est le nombre d'éléments d'un jeu d'échantillons de pente et de déviation qui donne des valeurs calculées indicative de valeurs à l'intérieur d'une gamme où ladite équation-1 d'étalonnage est prévue pour modèle.

10. Un procédé selon les revendications 1 à 8, dans lequel un perfectionnement supplémentaire comprend une opération de réduction d'erreurs.

FIG. 1

**BOX 1**
CALIBRATE INSTRUMENT-1 OR i
BY DEFINING A CALIBRATION
EQUATION-1 WHICH MODELS
THE CORRESPONDENCE BETWEEN
SPECTRAL DATA MEASURED
BY INSTRUMENT-1 AND    P I
FOR EACH MEMBER OF THE
SET OF SAMPLES WITH AN SEE
NOT SIGNIFICANTLY
GREATER THAN THAT SEE
INHERENT IN THE DIRECT TEST
METHOD USED TO DETERMINE P I.

**BOX 2**
DETERMINE SOME PROPERTY
OF INTEREST ( P I)  WITH A
DIRECT TEST METHOD FOR
EACH MEMBER OF THE SET OF
SAMPLES WITH A STANDARD
ERROR OF ESTIMATE, SEE.

**BOX 3**
DETERMINE A DEPENDENT
VARIABLE VALUE
  ( DEPENDENT VARIABLE-1 )
FOR EACH MEMBER OF A
SET OF CALIBRATION   TRANSFER
STANDARDS BASED UPON ITS
SPECTRA MEASURED
BY INSTRUMENT-1 AND
CALIBRATION EQUATION-1

**BOX 5**
SELECT CONSTANTS ( CONSTANTS-2
OR k )FOR CALIBRATION EQUATIONS-2
SO THAT THE SUM OF ABSOLUTE
DIFFERENCES FOR EACH MEMBER
OF SAID CALIBRATION SET BETWEEN
CORRESPONDING DEPENDENT
VARIABLE-1 AND DEPENDENT
VARIABLE-2 ARE MINIMIZED; E.G.
SUM OF ALL I DEPENDENT
VARIABLE-1 MINUS DEPENDENT
VARIBLE-2 I$^2$ FOR EACH MEMBER
OF THE CALIBRATION SET IS
MINIMIZED.

**BOX 4**
OBTAIN SPECTRAL DATA FOR
EACH MEMBER OF SAID SET OF
CALIBRATION TRANSFER STANDARDS
BY   MEANS OF INSTRUMENT-2 AND
DIGITIZE) OR MAKE AN ANALOG
SIGNAL OF SUCH DATA TO DETERMINE
A SET OF INDEPENDENT
VARIABLES ( INDEPENDENT
VARIABLES-2 )

**BOX 7**
PREDICT P I. FOR " UINKNOWNS "
WITH A STANDARD ERROR OF
PREDICTION(SEP) THAT IS NOT
SIGNIFICANTLY GREATER THAN
" SEE "

**BOX 6**
ERROR REDUCE, e.g.
SLOPE AND BIAS ADJUST,
CONSTANTS-2 WITH KNOWNS
ON INSTRUMENT-2

**BOX 8**
REPEAT FOR SAME OR
DIFFERENT INSTRUMENT
IF DESIRED

**BOX 9**
FINISHED

**EXAMPLE 5**
**FLOW DIAGRAM**

A — Instrument–i
calibrated in transmission mode
capable of predicting MTBE blends

B — Instrument–i in transflectance mode
calibrated by transfer of calibration
equation from (A)

C — Instrument–k in transflectance mode
calibrated by transfer from (B)
capable of predicting MTBE blends

*Instrument–i in Catlettsburg Refinery*
*Instrument–k in St. Paul Refinery*

**Figure 2**

32

**EXAMPLE 6**
Flow Diagram

Obtain Calibration Equation–i for instrument–i using 72 samples.

$$Y_s^i = A^i + \Sigma_J B_J^i X_{JS}^i$$

(See Example 1)

Using 25 standards of Table 7, obtain spectral data –i and –k, and calculate $Y_s^i$ for each member, s.

Using Mathematical Criterion I and Setting

$$Y_s^k = Y_s^i$$

obtain calibration equation–k

Using Mathmatical Criterion 1 and setting

$$Y_s^k = 3Y_s^i + 25$$

obtain calibration equation–k

S&B using 10 samples SEP = 0.223

**Method 1**

S&B using 10 samples

set $\hat{Y}_s^k = (Y_s^k - 25)/3$

find m and be for

$$Y_s^a = m\hat{Y}_s^k + b$$

SEP = 0.240

**Method 2**

S&B using 10 samples find m + b for

$$Y_s^a = mY_s^k + b$$

SEP = 0.240

**Method 3**

S&B using 10 samples find m and b for

$$3Y_s^k + 25 = mY_s^k + b$$

SEP = 0.240

Figure 3